(19) **Europäisches Patentamt** / **European Patent Office** / **Office européen des brevets**

(11) **EP 4 730 202 A1**

(12) **EUROPEAN PATENT APPLICATION**

(43) Date of publication:
22.04.2026 Bulletin 2026/17

(21) Application number: 25209534.4

(22) Date of filing: 17.10.2025

(51) International Patent Classification (IPC):
$G06N\ 3/045^{(2023.01)}$ $G06N\ 3/084^{(2023.01)}$

(52) Cooperative Patent Classification (CPC):
G06N 3/045; G06N 3/084

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 18.10.2024 IN 202411079346
14.11.2024 IN 202411088045

(71) Applicant: GDM Holding LLC
Mountain View, CA 94043 (US)

(72) Inventors:
• GOYAL, Sahil
560016 Bangalore (IN)
• PAUL, Sujoy
560016 Bangalore (IN)
• TULA, Debapriya
560016 Bangalore (IN)
• JAIN, Gagan
560016 Bangalore (IN)
• JAIN, Prateek
560016 Bangalore (IN)
• SHENOY, Pradeep Udayavar
560016 Bangalore (IN)

(74) Representative: Marks & Clerk GST
1 New York Street
Manchester M1 4HD (GB)

(54) **NESTED MASKGIT FOR FASTER IMAGE GENERATION**

(57) A computer-implemented method for token generation. The method comprises obtaining as an input a set of tokens. One or more positions of the input set of tokens are masked for prediction. The method comprises, for each of a plurality of iterations, generating a predicted token for each masked position by inputting the set of tokens into a token prediction neural network, selecting one or more predicted tokens for inclusion into the set of tokens, and updating the set of tokens so that, for each selected predicted token, the selected predicted token becomes an unmasked token at the corresponding masked position. The plurality of iterations comprise a plurality of groups of one or more iterations. A different token prediction neural network is used for each group, and a size of the token prediction neural network increases with each subsequent group.

FIG.1

Processed by Luminess, 75001 PARIS (FR)

**Description**

**BACKGROUND**

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

**SUMMARY**

According to a first aspect there is provided a computer-implemented method for token generation. The method comprises obtaining as an input a set of tokens where one or more positions of the input set of tokens are masked for prediction. For each of a plurality of iterations, the method comprises generating a predicted token for each masked position in the set of tokens by inputting the set of tokens into a token prediction neural network for the iteration, selecting one or more predicted tokens for inclusion into the set of tokens, and updating the set of tokens so that, for each selected predicted token, the selected predicted token becomes an unmasked token at the corresponding masked position in the set of tokens. The plurality of iterations comprise a plurality of groups of one or more iterations. A different token prediction neural network is used for each group. A size of the token prediction neural network increases with each subsequent group.

According to a second aspect there is provided a computer-implemented method for training a system for token generation. The method comprises obtaining a training data set comprising sets of input training tokens and corresponding sets of output training tokens. The method comprises, for each set of input training tokens, forming a set of tokens from the set of input training tokens where one or more positions of the set of tokens are masked and, for each of a plurality of iterations, generating a predicted token for each masked position in the set of tokens by inputting the set of tokens into a token prediction neural network for the iteration, selecting one or more predicted tokens for inclusion into the set of tokens, and updating the set of tokens so that, for each selected predicted token, the selected predicted token becomes an unmasked token at the corresponding masked position in the set of tokens. The method further comprises, after the plurality of iterations, setting the set of tokens as a set of predicted tokens for the set of input training tokens and modifying parameter values of the token prediction neural networks based on the sets of predicted tokens and the corresponding sets of output training tokens. The plurality of iterations comprise a plurality of groups of one or more iterations. A different token prediction neural network is used for each group. A size of the token prediction neural network increases with each subsequent group.

According to a third aspect there is provided a computer-implemented method for training a system for token generation. The method comprises obtaining a training data set comprising sets of input training tokens and corresponding sets of output training tokens. The method comprises, for each set of input training tokens, forming a set of tokens from the set of input training tokens, where one or more positions of the set of tokens are masked. The method comprises, for each set of input training tokens, for each of a plurality of iterations, generating a predicted token for each masked position in the set of tokens by inputting the set of tokens into a token prediction neural network for the iteration, selecting one or more predicted tokens for inclusion into the set of tokens, and setting the set of tokens as a set of predicted tokens for the set of input training tokens, where the set of predicted tokens comprise, for each selected predicted token, the respective selected predicted token as an unmasked token at the corresponding masked position in the set of predicted tokens. The method comprises, for each set of input training tokens, modifying parameter values of the token prediction neural networks based on the sets of predicted tokens generated at each iteration and the corresponding set of output training tokens. The plurality of iterations comprise a plurality of groups of one or more iterations. A different token prediction neural network is used for each group. A size of the token prediction neural network increases with each subsequent group. In specific examples, as set out below, the third aspect may include training using a distillation and/or a distillation loss.

According to a fourth aspect there is provided a computer-implemented method for performing a multi-step task. The method comprises obtaining, as an input, at a current step in the multi-step task, a set of tokens and processing, at the current step, the set of tokens using a nested neural network to generate a neural network output. The nested neural network comprises a series of (i) a master neural network and (ii) one or more smaller neural networks. Each smaller neural network in the series is made up of a corresponding subset of parameters of both the master neural network and each preceding smaller neural network in the series. Processing the set of tokens using the nested neural network to generate the neural network output at the current step comprises selecting one of (i) the master neural network and (ii) the one or more smaller neural networks for processing the set of tokens and processing the set of tokens using the selected neural network to generate the neural network output. The selection is based upon the selected neural network being adjacent to one of the neural networks of the series used in a previous step of the multi-step task preceding the current step.

According to a fifth aspect there is provided a computer-implemented method for performing a multi-step task. The method comprises obtaining, as an input, at a current step in the multi-step task, a set of tokens, maintaining a cache of calculated attention features generated by a first neural network of a set of neural networks at a previous step in the multi-step task, and selecting a second neural network from the set of neural networks for processing the set of tokens to generate a neural network output for the current step. The second neural network is different from the first neural network. The method further comprises, in response to selecting the second neural network, refreshing the cache of calculated attention features to clear the calculated attention features generated by the first neural network at the previous step in the multi-step task from the cache and processing the set of tokens using the second neural network to generate the neural network output for the current step.

There is also provided a system comprising one or more computers and one or more storage devices storing instructions that when executed by the one or more computers cause the one or more computers to perform the operations of the method of the first aspect and/or second aspect.

There is also provided one or more computer storage media storing instructions that when executed by one or more computers cause the one or more computers to perform the operations of the method of the first aspect and/or the second aspect.

Particular embodiments of the subject matter described in this specification can be implemented so as to realize one or more of the following advantages.

More efficient token prediction (e.g. for use in image, video or audio generation) is achieved by using token prediction neural networks of varying sizes. Initial predictions may utilize smaller token prediction neural networks for reduced computational load, and later predictions may utilize larger token prediction neural networks for improved accuracy. Nested networks may be used, that is, networks that share parameters, so that only a single master parameter set needs to be stored. This reduces the memory required to implement the multiple neural networks, and reduces training computation.

Masked tokens can be generated by the token prediction neural networks in parallel for each iteration of a set of iterations. A selection of the most confident predicted tokens (the tokens with the highest confidence score) are unmasked for later iterations. This process reduces the complexity of the token prediction task, relative to traditional autoregressive methods. Moreover, this parallel prediction, combined with the iterative refinement of selecting only the most confident tokens, results in a tangible reduction in the overall number of sequential operations compared to autoregressive models. This directly improves the computational efficiency and reduces the end-to-end latency for generating a complete set of tokens, a critical advantage for time-sensitive, real-time, and/or real-world applications such as real-time video frame prediction or interactive audio synthesis.

Attention features (e.g. keys and values) for unmasked tokens are cached for later use. This reduces the computational burden of implementing attention in the token prediction neural networks. In addition, the cache of attention features are refreshed (regenerated) each time the token prediction neural network model is changed. This ensures that cached attention features remain representative of the current token prediction neural network's features, thereby improving accuracy.

The methods described herein improve the speed of class-conditional image generation tasks by up to 2.92 times relative to previous methods. The methods described herein improve the speed of class-conditional video generation tasks by up to 2.55 times relative to previous methods. These improvements in processing speed and computational efficiency translate to concrete benefits in the computer system's operation, such as reduced power consumption, lower memory bandwidth requirements, and the ability to deploy more complex generation tasks on hardware with limited computational resources, for instance, on mobile or edge devices.

Whilst certain implementations increase the size of the token prediction neural network over time (e.g. with different groups of one or more iterations), the size of the token prediction neural network may be varied more generally (e.g. according to a predefined schedule). For instance, according to a further implementation there is provided a computer-implemented method for token generation. The method comprises: obtaining as an input a set of tokens, wherein one or more positions of the input set of tokens are masked for prediction; and for each of a plurality of iterations: generating a predicted token for each masked position in the set of tokens by inputting the set of tokens into a token prediction neural network for the iteration; selecting one or more predicted tokens for inclusion into the set of tokens; and updating the set of tokens so that, for each selected predicted token, the selected predicted token becomes an unmasked token at the corresponding masked position in the set of tokens. The plurality of iterations comprise a plurality of groups of one or more iterations, wherein a different token prediction neural network is used for each group, and a size of the token prediction neural network changes with each subsequent group. The size of the token prediction neural network may increase or decrease with each change.

By increasing or decreasing the size of the token prediction neural network, the plurality of token prediction neural networks may be tailored and/or depend upon the particular task. That is, for some tasks, the optimising the balance between computational complexity and output accuracy may benefit from using larger models in earlier iterations and smaller models in later iterations, in contrast to other tasks that may benefit from using smaller models in earlier iterations and larger models in later iterations. For example, a task that includes highly specific and/or detailed alignment-driven inputs may require larger models in earlier iterations to properly align the token prediction neural network outputs with the given alignment objective but may only require smaller models in later iterations once the initial outputs begin to align with the alignment objective to achieve an accurate output whilst also reducing computational complexity. As a specific example, the task may include a task to generate a video of a real-world environment and the alignment-driven inputs may include a plurality of information (e.g. including image, video, audio) specifying exactly what the video should depict. In this specific example, using smaller models initially may not cause the initial outputs to align with the alignment objective specifying exactly what the video should depict, whereas using a larger model for earlier iterations may cause the initial outputs to align and thus resulting in higher accuracy whilst also reducing computational complexity. Of course, therefore, the balance between computational complexity and model accuracy may be achieved either by increasing or decreasing (varying) the size of the token prediction neural network.

## BRIEF DESCRIPTION OF THE DRAWINGS

FIG.1 depicts an example system for token generation in accordance with the techniques described herein.
FIG.2 depicts an example master token prediction neural network comprising one or more smaller token prediction neural networks.
FIG.3 depicts an example system for token generation implementing an example cache of attention features for use by an attention neural network.
FIG.4 depicts an example system for selecting predicted tokens for inclusion into a set of tokens based upon a confidence score for each predicted token.
FIG.5 depicts an example training system for training a system for token generation in accordance with the techniques described herein.
FIG.6 depicts an example algorithm for token generation in accordance with the techniques described herein.
FIG.7 depicts a first set of experimental results for an example system for token generation in accordance with the techniques described herein.
FIG.8A depicts a second set of experimental results for an example system for token generation in accordance with the techniques described herein.
FIG.8B depicts a third set of experimental results for an example system for token generation in accordance with the techniques described herein.
FIG.9 depicts a fourth set of experimental results for an example system for token generation in accordance with the techniques described herein.
FIG. 10A depicts a fifth set of experimental results for an example system for token generation in accordance with the techniques described herein.
FIG.10B depicts a sixth set of experimental results for an example system for token generation in accordance with the techniques described herein.
FIG.11 depicts a seventh set of experimental results for an example system for token generation in accordance with the techniques described herein.
FIG.12A depicts first programming code for calculating inference-time floating point operations (FLOPs) of an example system for token generation in accordance with the techniques described herein.
FIG.12B depicts second programming code for calculating inference-time floating point operations (FLOPs) of an example system for token generation in accordance with the techniques described herein.
FIG. 13 depicts a flow diagram of a method for token generation.
FIG.14 depicts a flow diagram of a method for training a system for token generation.
FIG.15 depicts a flow diagram of a method for training a system for token generation.
FIG.16 depicts a flow diagram of a method for performing a multi-step task.
FIG.17 depicts a flow diagram of a method for performing a multi-step task.

Like reference numbers and designations in the various drawings indicate like elements.

## DETAILED DESCRIPTION

This specification describes a system and method, implemented as computer programs on one or more computers in one or more locations, for generating data (e.g. image data or audio data) using token prediction neural networks of varying sizes. A size, as referred to herein, may refer to a number of parameters (e.g. trainable parameters) of the token prediction neural network. Tokens are generated over a number of iterations. In each iteration, tokens for all masked positions may be predicted, with a subset of the predicted tokens being selected for unmasking. Accordingly, a number of tokens being predicted may be reduced with each iteration. Smaller token prediction neural networks are used for earlier iterations and larger token prediction neural networks are used for later iterations. This provides a more efficient means of generating data, as model complexity is increased with as the number of tokens being generated reduces. This allows smaller, less computationally costly, models to be used for a higher number of predictions, and larger, more accurate, models to be used for a smaller number of predictions.

This strategic allocation of computational resources addresses the problem of optimizing a balance between computational cost and prediction quality in a multi-step generative process. By front-loading the computationally cheaper, smaller models to handle the bulk of the initial predictions (e.g. generating the general structure or background of an image), the system conserves significant computational resources. The more powerful, and thus more computationally expensive, larger models are reserved for the final, more nuanced refinement steps where their higher accuracy has the greatest impact on the final output quality (e.g. generating specific and highly nuanced detail in an image). Of course, as discussed above, front-loading more computationally expensive, larger models to handle the initial predictions may in certain contexts be a better strategy for optimising the balance between computational complexity and accuracy. This intelligent management of computational resources results in a measurable reduction in the total floating-point operations (FLOPs) required to generate the output data compared to a method using the same size model for all iterations.

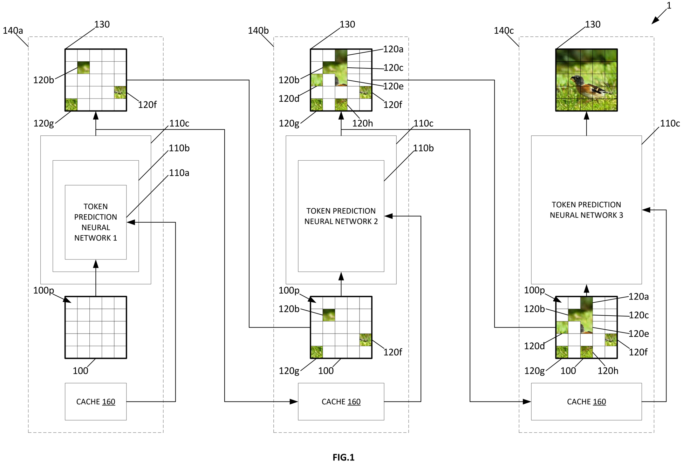

In addition, certain implementations make use of key-value caching for use in more efficiently performing attention. The token prediction neural networks may each include an attention neural network that calculates keys and values for use in an attention mechanism during the prediction of tokens. Attention features (e.g. keys and values) for predicted tokens that are unmasked (e.g. that are not be being predicted in a later iteration) are cached (stored) for use in one or more later iterations. This reduces the number of computations that need to be performed by the attention neural network, as previously calculated attention features can be accessed from the cache. The cache may be refreshed (e.g. recalculated) each time the token prediction neural network is switched to improve the accuracy of the predictions. FIG.1 depicts an example system 1 for token generation in accordance with the techniques described herein. The following method is described with reference to the example system depicted in FIG.1. The method comprises: obtaining as an input a set of tokens 100. One or more positions 100p of the input set of tokens 100 are masked for prediction. For example, where the input set of tokens 100 represent an image, the position(s) 100p masked for prediction may be segments, chunks, or blocks of the image that are filtered, obfuscated, obscured, hidden, etc. For each of a plurality of iterations 140a, 140b 140c, the method comprises generating a predicted token (e.g. 120a - 120h) for each masked position in the set of tokens by inputting the set of tokens 100 into a token prediction neural network 110a, 110b, 110c for the iteration (e.g. input to a first, second or third token prediction neural network 110a, 110b, 110c for a first, second, and third iteration respectively 140a, 140b, 140c). With reference to the foregoing example, generating the predicted token (e.g. 120a - 120h) may include generating a portion of an image 130. In other examples, the type of the predicted token 120a - 120h may be another type of data (e.g. text, video, audio, point-cloud, etc.). With reference to the foregoing example, generating the predicted token for each masked position 100p may include generating a token for each pixel or portion of the masked image 130 (i.e. including but not limited to predicted tokens 120b, 120f, 120g in the first iteration 140a).

For each of the plurality of iterations 140a, 140b, 140c, the method further comprises selecting one or more predicted tokens 120a - 120h for inclusion into the set of tokens. For example, with reference to FIG.1, for the first iteration 140a, the predicted tokens generated may be tokens representing each portion of the image 130 and the selected one or more predicted tokens may be tokens representing portions 120b, 120f, 120g of the image 130. For the second iteration 140b, the selected predicted token(s) may be tokens representing portions 120a, 120b, 120c, 120d, 120e, 120f, 120g, 120h of the image 130. For each of the plurality of iterations 140a, 140b, 140c, the method further comprises updating the set of tokens 100 so that, for each selected predicted token 120a - 120h, the selected predicted token 120a - 120h becomes an unmasked token at the corresponding masked position in the set of tokens (e.g. an unmasked token representing a portion of the image 130, rather than a filtered, obfuscated, obscured, hidden, etc. portion of the image 130, as may be the case for a masked token). The plurality of iterations comprise a plurality of groups of one or more iterations. For example, the first iteration 140a may be part of a first group (not depicted), the second iteration 140b may be part of a second group (not depicted), and the third iteration 140c may be part of a third group (not depicted). A different token prediction neural network is used for each group. For example, for the first group including the first iteration 140a, the first token prediction neural network 110a may be used. In this example, for the second group including the second iteration 140b, the second token prediction neural network 110b may be used. In this example, for the third group including the third iteration 140c, the third token prediction neural network 110c may be used. Use may include processing the input set of tokens 100 with the respective token prediction neural network 110a - 110c to generate the predicted tokens. A size of the token prediction neural network 110a, 110b, 110c increases with each subsequent group. For example, the size may include a number of parameters of the token prediction neural network.

By using token prediction neural networks 110a, 110b, 110c of varying size, the complexity of the neural networks used can be scaled appropriately, producing a more efficient method. In particular, smaller token prediction neural networks (e.g. 110a compared to 110b or 110c) may be used for earlier iterations and larger token prediction neural networks may be used for later iterations (e.g. 110b or 110c for iterations 140b and 140c respectively later to the first iteration 140a). This allows earlier, more coarse, predictions to be achieved through more computationally efficient models. For instance, background portions of an image 130 may be predicted using one or more smaller models, whilst more complicated foreground portions within an image may be predicted using one or more larger models. The number of iterations within each group may be fixed, or may vary depending on the group. For example, the first iteration 140a may be part of a first group of 16 iterations, the second iteration 140b may be part of a second group of 8 iterations, and the third iteration 140c may be part of a third group of 4 iterations. In another example, where the group size is fixed, the first iteration 140a may be part of a first group of 16 iterations, the second iteration 140b may be part of a second group also of 16 iterations, and the third iteration 140c may be part of a third group also of 16 iterations. The size of the token prediction neural network 110a, 110b, 110c may change linearly with each group (e.g. may change based on a predefined scaling factor).

Scaling the complexity of neural networks in this way is particularly effective because the statistical characteristics of data like real-world images, video, or audio spectrograms are often spatially or temporally correlated. Initial iterations can thus effectively "sketch out" low-frequency components (e.g. sky, fields, ambient noise) using smaller models that capture broader patterns. Subsequent iterations, using larger models with greater capacity for detail, can then focus on generating the high-frequency components (e.g. object textures, sharp sound onsets) within the established context, a task for which the larger models may be better suited. This adaptation of the model size to the evolving nature of the prediction task contributes significantly to system efficiency.

The tokens 120a - 120h may be encodings (e.g. latent embeddings) of input data, for instance image, video or audio data. The tokens 120a - 120h may be numeric representations of input data (e.g. one-hot encodings or a discrete value corresponding to an input from a predetermined vocabulary of tokens). The set of input tokens 100 may be a series of tokens. The set of input tokens may be any arrangement of tokens (e.g. a matrix or grid). A masked token may be located at each masked position (e.g. example masked position 100p) in the set of tokens 100. For example, in the set of tokens 100 of the first iteration 140a, there may be a masked token located at 25 positions in the set of tokens 100. In another example, in the set of tokens 100 of the second iteration 140b, there may be a masked token at 22 positions in the set of tokens 100. The initial input tokens 100 may be fully masked (e.g. may comprise a full set of masked tokens), for instance, for data synthesis (as depicted in FIG.1). Alternatively, the initial input tokens 100 may be a combination of unmasked tokens 120a - 120f and masked tokens (e.g. a token masked at position 100p), for instance, data completion. For example, the second or third iteration 140b, 140c may instead be the first iteration 140a, i.e. where the input set of tokens 100 include a combination of (i) 3 and 8 unmasked tokens for the second and third iterations 140b, 140c respectively and (ii) 22 and 17 masked tokens for the second and third iterations 140b, 140c respectively.

Any unmasked initial input tokens may be obtained by inputting data into an encoder (e.g. an encoder neural network, not depicted) that is configured to generate tokens from input data (e.g. to generate tokens from input image, video or audio data). The tokens may be mapped onto a discrete vocabulary. The initial unmasked input tokens may therefore be used to condition the predictions of the token prediction neural networks.

For instance, one or more pixels of image data may be encoded for form a token. For instance, a "patch" of image data, that is, a subregion of pixels (e.g. a consecutive selection of pixels) may be encoded for each token. In another example, a predetermined vocabulary of tokens, which may include discrete numeric value for each element in the vocabulary (e.g. word, wordpiece, etc.), may be used to maps tokens. In another example, the predetermined vocabulary of tokens may include a plurality of predefined embedding vectors (e.g. representing distinct visual patterns or features in an image).

Any masked positions (e.g. masked tokens; a token masked at position 100p) within the set of tokens 100 may be positions in the set of tokens 100 that include a predefined mask token. The predefined mask token may be a token that has a predefined value. The predefined mask token may indicate that the position is masked. The token prediction neural network may be configured to predict a token for each masked position. For example, the predefined mask token may represent "[MASK]" or "-1".

A context may also be used to condition the predictions of the token prediction neural networks. For instance, a context input may be received, and may be input into the token prediction neural networks 110a - 110c at each iteration 140a - 140c. As an example, the context may be one or more context tokens that are included in the set of tokens as unmasked tokens (not depicted). The context may define one or more characteristics of the tokens to be generated. For instance, for image, video or audio generation, the context may define a type of image, video or audio to be generated, and/or content of the image, video or audio to be generated. The context may be an embedding of a context prompt. For instance, text (e.g. natural language prompt) may be embedded using an encoder to form the context. The context may be concatenated to the set of tokens (e.g. at the start or the end of the tokens). For instance, where the set of tokens include data tokens that are embedded audio, video or image data, one or more context tokens may be concatenated with the data tokens. The token prediction neural networks 110a - 110c may be configured to predict data tokens (e.g. 120a - 120h) at masked positions (e.g. 100p) based on the input context tokens, and based on any input data tokens 100. In a specific example, the input context tokens may be concatenated with the input set of tokens 100 for provision to the token prediction neural networks 110a - 110c to generate the predictions.

Following prediction of tokens (e.g. after the plurality of iterations 140a - 140c), the tokens may be decoded to determine output data. For instance, a decoder (e.g. a decoder neural network, not depicted) may be configured to determine output data from tokens. The output data may be image data, video data or audio data. In a specific example, the output from the token prediction neural networks 110a - 110c at the first to third iterations 140a - 140c may include one or more discrete or continuous values to be decoded to determine the output data (e.g. an image, video, audio, etc.).

The encoder and decoder may be trained to learn to efficiently encode input data onto an encoding space. The encoder and decoder may be trained through various methods, such as training as a generative adversarial network (GAN), training as an autoencoder (e.g. a variational autoencoder), etc. The encoder may include a quantizer that quantizes encoded data to determine tokens (e.g., to map the encoded data onto discrete tokens, such as to map onto the nearest token in the vocabulary). For instance, the encoder and decoder may be a vector quantized autoencoder (VQ-VAE). The encoder and decoder may be trained with one or both of a self-reconstruction loss and a discriminator loss (e.g. a photo-realism loss for image and or video generation).

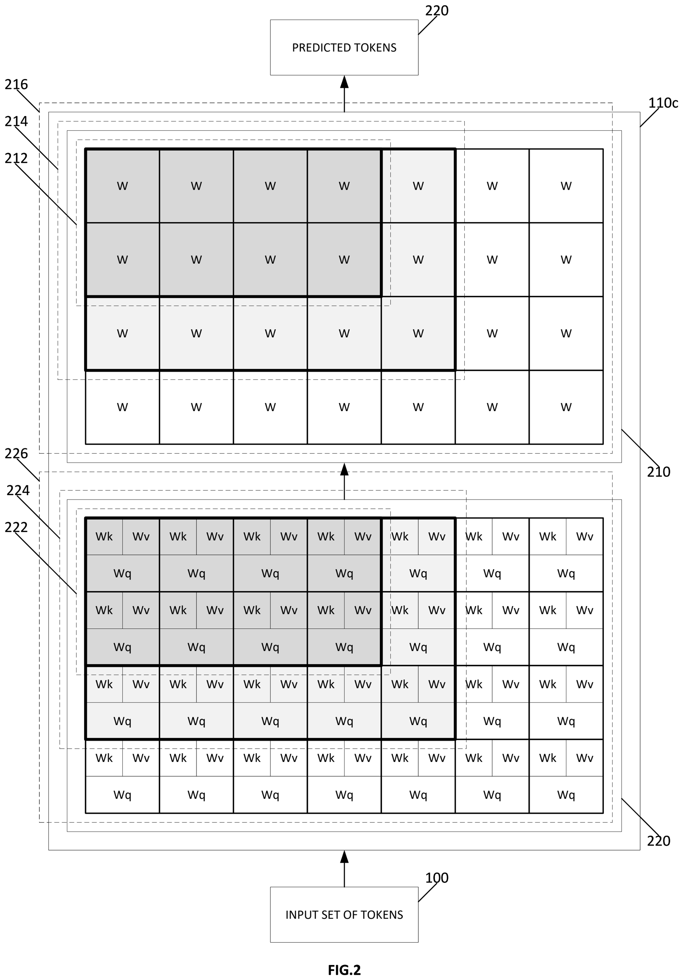

FIG.2 depicts an example master token prediction neural network 110c comprising one or more smaller token prediction neural networks 110a, 110b.

For example, with reference to FIG.1, the first and second token prediction neural networks 110a, 110b may be the smaller token prediction neural networks and the third token prediction neural network 110c may be the master token prediction neural network.

The token prediction neural networks 110a - 110c may form a set of nested token prediction neural networks 110a - 110c that comprise a master token prediction neural network 110c and one or more smaller token prediction neural networks 110a, 110b. For example, a first smaller token prediction neural network 110a may include parameters 212, 222, and a second smaller token prediction neural network 110b may include parameters 214, 224. In this example, the master token prediction neural network 110c may include parameters 216, 226. In this example, as depicted in FIG.2, the parameters of each nested token prediction neural network 100a - 110c include trainable weights (W) of a fully connected layer 210 and trainable weights of an attention layer 220 (e.g. including key (Wk), value (Wv), query (Wq) weights). Each smaller token prediction neural network 110a, 110b may be smaller than the master token prediction neural network 110c, and each smaller token prediction neural network 110a, 110b may be made up of a corresponding subset of parameters of the master token prediction neural network 110c. For example, with reference to FIG.2, the first token prediction neural network 110a may include parameters 212, 222 which are a subset of the parameters 216, 226 of the master token prediction neural network 110c. In this example, the parameters 212, 222 may also be a subset of the parameters 214, 224 of the second token prediction neural network 110b. Each parameter may be applied to a corresponding neuron in the token prediction neural network. Each smaller token prediction neural network may also be referred to as a "further token prediction neural network", a "distilled token prediction neural network", or a "sub-token prediction neural network". For example, the first token prediction neural network 110a may be a further, distilled, or subset with respect to the second token prediction neural network 110b. Nesting, as referred to herein, may therefore be regarded as one or more smaller neural networks being part of a larger neural network (e.g. with reference to the parameters of the respective neural networks and the number thereof).

Nested neural networks may be implemented through partial computation of matrix multiplication. A sub-model (e.g. a smaller or a distilled model, such as 110a, 110b) may be extracted from the main model 110c by applying only partial computation of any matrix multiplication involving the parameter values of the master neural network 110c. For instance, for any matrix multiplication based on a matrix of network parameters 216, 226, only partial computation of the matrix multiplication may be performed to ensure that only the respective subset of parameters is utilized. For the master neural network 110c, all parameters 216, 226 in the parameter matrix may be utilized in a full matrix multiplication, whereas for smaller neural networks (e.g. the sub-models, or the distilled neural networks, such as 110a, 110b), partial computation can be used to select the parameters for that smaller neural network 110a, 110b. Such partial computations can be setup throughout the network to obtain nested models.

In a specific example, with reference to FIG.2, matrix multiplication with the master neural network 110c may include using a full parameter matrix for both the fully connected layer 210 and the attention layer 220 (i.e. fully connected layer parameters 216 and attention layer parameters 226). In this specific example, matrix multiplication with the smaller neural networks 110a, 110b may include using a partial parameter matrix for both the fully connected layer 210 and the attention layer 220 (i.e. fully connected layer parameters 212 and attention layer parameters 222 for the first token prediction neural network 110a; fully connected layer parameters 214 and attention layer parameters 224 for the second token prediction neural network 110b). The partial computation may be implemented in any suitable way and may occur by selecting parameters in any suitable pattern (e.g. not only selecting a subset of parameters as depicted in FIG.2).

The advantage of this nested implementation, which may include selectively using subsets 212, 214, 222, 224 of a master parameter matrix 216, 226, is a substantial reduction in memory footprint. Instead of requiring storage for multiple, distinct sets of parameters for each model size, only the single, master set of parameters needs to be stored in memory. This is particularly advantageous for deployment on memory-constrained devices, such as embedded systems or mobile GPUs, and also streamlines the training process by ensuring parameter updates are coherently managed across all effective model sizes.

In a further example, where the token prediction neural networks comprise a transformer neural network and a predictor neural network, they may comprise a transformer parameter set and a predictor parameter set. Partial computations may be applied to any transformer parameters and or any predictor parameters, depending on the sub-model that is being utilised.

For example, considering a parameter matrix $\mathbf{W} \in \mathbb{R}^{d' \times d}$ and feature vector $\mathbf{x} \in \mathbb{R}^{d}$ then the computation $\mathbf{y} = \mathbf{W}\mathbf{x}$ can be partially obtained by computing $\mathbf{y}_{[:\frac{d'}{p}]} = \mathbf{W}_{[:\frac{d'}{p},:]} \mathbf{x}$, if $\mathbf{y}$ is desired to be partial and $\mathbf{y} = \mathbf{W}_{[:,:\frac{d}{p}]} \mathbf{x}_{[:\frac{d}{p}]}$, if $\mathbf{x}$ is partial. In the above, p represents a downscaling factor, which represents the dimensions of the master neural network relative to the smaller neural network.

The token prediction neural networks may form a nested set such that, going from the largest token prediction neural network 110c (e.g. the master token prediction neural network) to the smallest token prediction neural network 110a, each subsequent token prediction neural network (after the largest token prediction neural network 110c) in the set is formed of a subset of parameters (and corresponding neurons) of the immediately preceding token prediction neural network in the set. In a specific example, with reference to FIG.1 and FIG.2, the master token prediction neural network 110c precedes the first smaller token prediction neural network 110b which precedes the smallest token prediction neural network 110a.

The nested token prediction neural networks 110a - 110c may be ordered such that the smallest token prediction neural network 110a includes the most significant neurons (which belong to all of the token prediction neural networks), and each token prediction neural network 110a - 110c in the set, going from smallest to largest, adds the next most significant neurons. Each nested neural network other than the master neural network 110c can be considered a "smaller, "downscaled" or "distilled" neural network, a "sub-model", or a "sub-neural network".

Smaller token prediction neural networks in the set of nested token prediction neural networks 110a - 110c may be formed of parameters (e.g. weights) that are subsets of parameters of larger token prediction neural networks in the set (e.g. 110b is larger with respect to 110a).

As the set of token prediction neural networks 110a - 110c share parameters, they may instead be considered different subsets of the same, master token prediction neural network 110c. Accordingly, each time the token prediction neural network is changed (e.g. at each of a first to third iteration 140a - 140c), a new selection of the parameters of the master token prediction neural network 110c may be used. That is, for the first iteration 110a of each group of iterations (e.g. a first group including the first iteration 110a, a second group including the second iteration 110b, a third group including the third iteration 110c), a new set of parameters may be added to the token prediction neural network to increase the size of the token prediction neural network.

For instance, for a first group of iterations, a first token prediction neural network 110a may be used, and for a second group of iterations, a second token prediction neural network 110b may be used. The second token prediction neural network 110b may be larger than the first token prediction neural network 110a, and may include all of the parameters 212, 222 of the first token prediction neural network 110a, plus an addition selection of parameters (e.g. taken from a master token prediction neural network 110c). Accordingly, each time a new (larger) token selection neural network is selected, the new (larger) token selection neural network includes all of the parameters of the previous token selection neural network, plus additional parameters. For example, with reference to FIG.2, the additional parameters may be a set difference or relative complement between the first set of parameters 212, 222 and the second set of parameters 214, 224.

The different token prediction neural networks 110a - 110c may be implemented as separate neural networks or as a single neural network wherein varying numbers of neurons are activated. For instance, a single neural network 110c may be maintained, and as the size of the network is increased, additional neurons may be activated.

In general, a single set of parameters 216, 226 (for the master neural network) may be stored and accessed, and used selectively for each token prediction neural network 110a - 110c.

The token prediction neural network 110c used in a final iteration of the plurality of iterations 140a - 140c may be the master token prediction neural network 110c. All other token prediction neural networks 110a, 110b may be formed from a subset of the parameters of the master token prediction neural network 110c.

Each token prediction neural network 110a - 110c may comprise a transformer that includes an attention neural network and a prediction neural network. Each attention neural may comprise one or more attention layers 220. The attention neural network may perform attention (e.g. self-attention) on input tokens. The output(s) of the attention neural network are input into the prediction neural network for calculation of predicted token(s). The prediction neural network may be a feed forward neural network (e.g. including a fully connected layer 210).

For instance, the attention neural network may calculate attention output values given input tokens 100. The attention output values may be hidden (latent) values. The attention output values may be in the form of an output vector for each input token. The attention neural network may determine attention output values that are supplied to the prediction neural network.

Generally, to apply the self-attention operation, each attention mechanism uses one or more attention heads.

Each attention head generates a set of queries, a set of keys, and a set of values, and then applies any of a variety of variants of query-key-value (QKV) attention, e.g., a dot product attention function or a scaled dot product attention function, using the queries, keys, and values to generate an output.

As a particular example, in an attention head of a self-attention neural network layer, the attention mechanism may be configured to apply each of a query transformation, e.g., defined by a matrix $W^Q$, a key transformation, e.g., defined by a matrix $W^K$, and a value transformation, e.g., defined by a matrix $W^V$, to the attention layer input for each hidden state of an input sequence X to derive a respective query vector $Q = XW^Q$, key vector $K = XW^K$, and value vector $V = XW^V$ which are used determine an updated hidden state. For example, the attention head can generate an updated hidden state for each input position computing a weighted sum of the values, weighted by a similarity function of the query for the input position to the corresponding key. The similarity function may comprise, e.g., a dot product, cosine similarity, or other similarity measure.

Each query, key, value can be a vector that includes one or more vector elements. When there are multiple attention heads, the attention block then combines the outputs of the multiple attention heads, e.g., by concatenating the outputs and, optionally, processing the concatenated outputs through a linear layer.

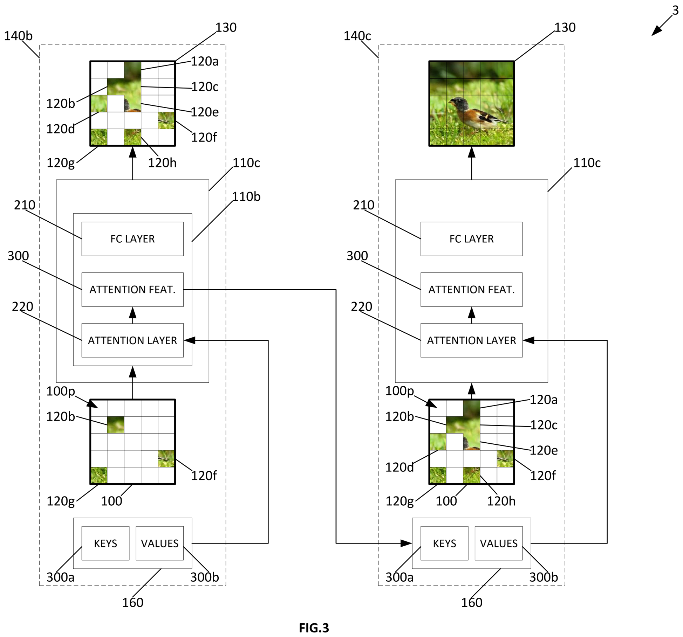

FIG.3 depicts an example system 3 for token generation implementing an example cache 160 of attention features 300 for use by an attention neural network. The example system 3 of FIG.3 may be analogous to the example system 1 depicted in FIG.1. For brevity, FIG.3 only depicts the second and third iterations 140b, 140c from FIG.1.

In some cases, the system 3 can store, for any given attention mechanism and when generating the output for any given input position, the attention features 300 (e.g. the keys and values) already computed for unmasked tokens. These attention features 300 can then be used during later iterations (e.g. used during the third iteration 140c after the second iteration 140b) rather than re-computing the attention features 300 for those unmasked tokens. For example, keys 300a and values 300b may be computed by the attention layer 220 during the second iteration 140b for unmasked tokens 120b, 120f, 120g. These attention features may subsequently be stored in the cache 160 for use by the attention layer 220 during the third iteration 140c.

Thus, in each iteration 100a - 100c, when predicting tokens for masked positions (e.g. 100p), the attention neural network 110b, 110c may determine, for each unmasked token (e.g. 120b, 120f, 120g among 120a - 120h in the input set of tokens 100 of the third iteration 140c), whether there are attention features 300 (e.g. keys 300a and values 300b) cached, and if so, may access the cached attention features 300. If the attention features 300 have not been cached (e.g. the token has only just been unmasked in the previous iteration, such as 120a, 120c, 120d, 120e, 120h unmasked in the second iteration 140b), then the attention features 300 may be for that token may be calculated and cached for later use. Storing keys 300a and values 300b in a memory for later re-use will generally be referred as storing the keys 300a and values 300b in a "KV cache."

The prediction neural network may include one or more layers configured to, for each masked position in the masked set of tokens, determine a predicted token. The prediction neural network may be a feed forward neural network (e.g. a neural network comprising a fully connected layer 210). Attention values from the attention neural network may be input into the prediction neural network. The prediction neural network may determine, for each masked position, a probability distribution across all potential tokens, and then sampling from the probability distribution to determine a predicted token. For example, the probability distribution may be a softmax probability distribution, i.e. a probability distribution resulting from the application of a softmax activation function.

The token prediction neural network may determine a probability distribution for each token, but may ignore the unmasked tokens when sampling the probability distributions. For example, the probability distribution may include a probability associated with each image, video, or audio token in a predetermined vocabulary of tokens.

Each token prediction neural network 110a - 110c may be a bidirectional transformer. That is, each token prediction neural network may process the set of tokens in both directions (forwards and backwards). By utilizing a bidirectional transformer, the token prediction neural network 110a - 110c may allow the data generation to utilize richer contexts by attending to all tokens, and specifically to extract information from multiple directions of the input set of tokens 100. In this context, the bidirectional transformer offers a significant advantage that synergises with the nested token prediction neural networks 110a - 110c. This synergy is particularly powerful within the nested framework - the smallest, most computationally efficient token prediction neural network (e.g. 110a) used in the early iterations (e.g. 140a) are provided with a high-degree of input information via an enhanced feature extraction mechanism. This enhanced feature extraction mechanism provides a foundation for the larger token prediction neural networks (e.g. 110b, 110c) to build upon in later iterations (e.g. 140b, 140c), thereby ensuring that the efficiency gained from use of smaller models does not compromise the contextual integrity of the generation process and propagate through the chain of nested neural networks 110a - 110c.

Each token prediction neural network 110a - 110c may be a decoder-only transformer (e.g. may be formed of a decoder portion of a general transformer architecture).

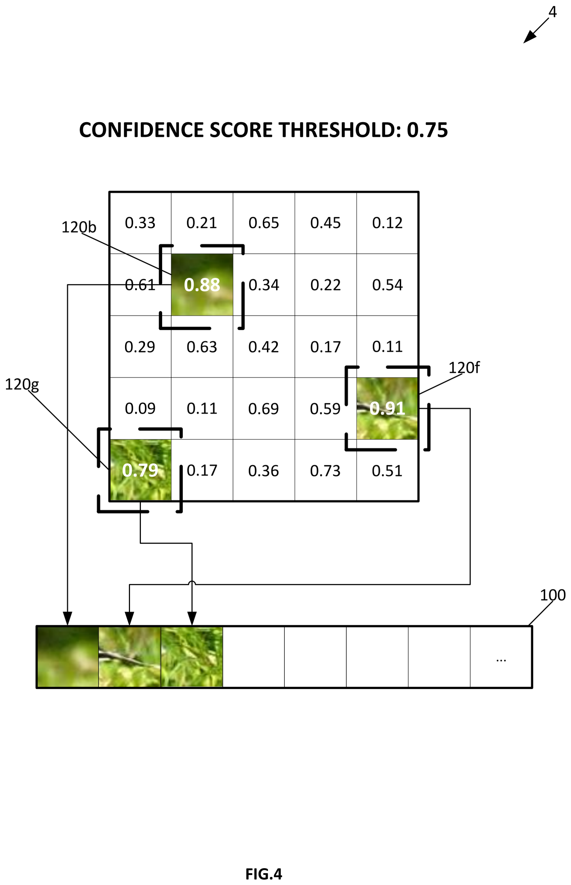

FIG.4 depicts an example system 4 for selecting predicted tokens for inclusion into a set of tokens 100 based upon a confidence score (e.g. 0.88, 0.91, 0.79) for each predicted token. For simplicity, the set of input tokens 100 depicted in FIG.1 are arranged as a series, however their arrangement in practice may differ (e.g. a grid, as depicted in FIG.1 and FIG.3). As described above, for each of the plurality of iterations 140a - 140c, a predicted token may be generated for each masked position (e.g. 100p). With reference to the example depicted in FIG.1, FIG.3, and FIG.4, generating the predicted tokens for each masked position may include generating a predicted token for 25 different positions in the set of input tokens 100, i.e. a predicted token for each position in a 5x5 grid. Continuing with this example, one or more of the 25 predicted tokens for the 25 different positions may be selected for inclusion into the set of tokens 100, e.g. for the input set of tokens 100 at the next iteration.

During each iteration 140a - 140c, the token prediction neural network 110a - 110c may calculate predicted tokens in parallel. For instance, predicted tokens for all masked positions may be determined in parallel. For instance, probability distributions may be determined for each masked position (e.g. 100p) in parallel, and then the predicted probability distributions may then be sampled to determine predicted tokens. For each sampled token, the probability of that token (according to the probability distribution) may also be determined. This probability may be referred to as a "confidence score", in that it may indicate a confidence that the token prediction neural network 110a - 110c has in the prediction. For example, as depicted in FIG.4, there may be 25 distinct confidence scores generated for a set of tokens 100 in a 5x5 grid arrangement. The confidence scores may be a numeric value ranging between 0 and 1. With reference to FIG.4, the confidence scores for predicted tokens 120b, 120f, 120g such that they become unmasked in the input set of tokens 100 for the next iteration are 0.88, 0.91, and 0.79 respectively. The selection of the predicted tokens 120b, 120f, 120g for inclusion in the set of tokens 100 may occur in examples based upon a confidence score threshold (e.g. 0.75 in the example system 4 of FIG.4).

An exploration factor (e.g. noise) may be added to the confidence scores to include exploration. For instance, after a probability for a predicted token is determined, a confidence score may for that token may be determined by adding the exploration factor to the determined probability for that predicted token. In a specific example, with reference to FIG.4, the probability for predicted token 120b may initially be 0.74 and the exploration factor may be 0.14, i.e. 0.74+0.14=0.88. In this specific example, the exploration factor may cause the confidence score to exceed a threshold which would otherwise not have been exceeded, thus causing the predicted token 120b to be unmasked in the input set of tokens 100 for the next iteration when it otherwise would not have been. Advantageously, exploration in the context of nested token prediction neural network 110a - 110c may enhance exploration in many cases where smaller token prediction neural networks (e.g. 110a) are less confident in their predictions than larger token prediction neural networks (110c). This leads to high-quality and uniform exploration overall, normalising any confidence imbalances that may arise between nested neural networks, which improves e.g. image, audio, video generation., The exploration factor may be noise. The exploration factor may be sampled from an exploration distribution (e.g. a noise distribution). The exploration distribution may be scaled over the iterations by a scaling factor that gets smaller as the iteration number increases. Accordingly, the exploration may be reduced as the iteration number increases.

According to an implementation, the method may further comprise maintaining a cache of calculated attention features 300 for unmasked tokens (e.g. attention features 300 calculated for unmasked tokens 120b, 120f, 120g in FIG.3) that are used by the attention neural network 110b, 110c. Attention features, may include one or both of keys 300a and values 300b (e.g. key-value pairs).

As a particular example, the method can make use of a key-value (KV) cache 160 that caches or stores keys 300a and values 300b as they are computed, for later re-use. That is, once the key 300a and value 300b are computed for a given unmasked position in the input sequence (e.g. a position of the unmasked tokens 120b, 120f, 120g), the system stores the key 300a and value 300b in a cache 160 or other memory to avoid having to re-compute the key 300a and value 300b when generating outputs for later positions in the input sequence (and, during training, when backpropagating gradients through the attention neural network). This can greatly reduce the computation required to perform the attention over many iterations.

The method may further comprise, in one or more iterations, caching one or more attention features 300 (e.g. keys 300a and values 300b) calculated by the attention neural network 110b, 110c for unmasked tokens for use in one or more subsequent iterations. For instance, in each iteration of at least the subset of the plurality iterations, one or more attention features 300 (e.g. a key 300a and/or a value 300b) are calculated and cached for each predicted token selected in an immediately preceding iteration (e.g. for each token that was unmasked in an immediately preceding iteration, such as 120b, 120f, 120g unmasked in the second iteration 140b preceding the third iteration 140c). No caching may be performed in the last iteration of the plurality of iterations (e.g. as no further attention calculations may be being performed). For the first iteration of the plurality of iterations 140a - 140c, caching may be performed for each unmasked token that is input at the first iteration. Cached attention features 300 may be used in subsequent iterations (e.g. subsequent iterations within each group).

Maintaining and using the cache 160 may comprise, in each iteration: if one or more attention features 300 (e.g. a key and/or value) are cached for a given unmasked token that is input into the token prediction neural network, using by the attention neural network the cached one or more attention features instead of recalculating the one or more attention features; and if one or more attention features are not cached for a given unmasked token that is input into the token prediction neural network, calculating by the attention neural network the one or more attention features and adding the one or more calculated features to the cache. In other words, cached keys 300a and values 300b computed for unmasked tokens 120b, 120f, 120g may be retrieved from the cache 160 and used by the attention neural network 110c, instead of recalculating the same keys 300a and values 300b for the same tokens in the unmasked tokens 120a - 120h in the input set of tokens 100 of the third iteration 140c.

The method may further comprise, during one or more of the iterations, refreshing the cache 160. Refreshing the cache 160 may comprise regenerating the cache 160 (e.g. recalculating the cached attention features 300). The cache 160 may be refreshed each time the token prediction neural network model 110a - 110c is changed. For example, the token prediction neural network 110a may change to a larger token prediction neural network 110b. That is, attention features may be recalculated for the first iteration of each group of iterations. Accordingly, cached attention features 300 may be used for each iteration of the group other than the first iteration. In one implementation, no attention features 300 are cached on the final iteration in a group (e.g. as they will be refreshed in the next iteration).

The step of refreshing the cache precisely when the token prediction neural network model 110a - 110c is changed addresses the problem of feature misalignment. A smaller network, operating on a smaller subset of parameters, generates attention features 300 (e.g. keys and values) that may be dimensionally and representationally tailored to that subset of parameters. Using the cached attention features 300 directly with a subsequent, larger network may introduce a representational misalignment because queries of the larger network are generated from a richer, higher-dimensional parameter space. By re-calculating or refreshing the cache 160 of the attention features 300 each time the token prediction neural network model 110a - 110c is changed, it is ensured that the attention mechanism operates with attention features 300 (e.g. keys and values) that are consistent with the feature space of the current token prediction neural network 110a - 110c, thereby preventing a degradation in prediction accuracy that could otherwise occur. This maintains high output quality while still benefiting from caching the attention features 300 within each group of iterations.

According to an implementation, the set of nested token prediction neural networks 110a - 110c comprise one or both of a set of nested attention neural networks and a set of nested prediction neural networks (e.g. feed forward neural networks). For each nested set (e.g. for the set of nested token prediction neural networks, and the set of nested attention neural networks), each subsequent neural network in the set (going from largest to smallest) may be formed of a subset of parameters of the immediately preceding neural network in the set.

According to an implementation, the token prediction neural network 110a - 110c generates a confidence score for each predicted token, and selecting one or more predicted tokens for inclusion into the set of tokens 100 comprises selecting a subset of the predicted tokens based on the confidence scores. For instance, selecting the subset may comprise selecting a subset of the predicted tokens that has the highest confidence. In a specific example, with reference to FIG.4, the selected predicted tokens 120b, 120f, 120g may have a corresponding confidence score higher than every remaining predicted token (i.e. 0.88, 0.91, and 0.79 is a higher confidence score than every other confidence score in other positions of the 5x5 grid of FIG.4). For instance, in each iteration, the k predicted tokens with the highest confidence score may be selected to be unmasked, where k is a positive integer. In the specific example depicted in FIG.4, k may be 3. The parameter k may be fixed or may be varied over the iterations (e.g. based on a predefined schedule). In the specific example depicted in FIG.1, k may be 3 for the first iteration 140a and k may be 8 for the second iteration 140b. Alternatively, the selecting the subset may comprise selecting the predicted tokens (e.g. for unmasking) with a probability based on their corresponding confidence scores. When a predicted token is unmasked (e.g. 120a - 120h), the predicted token may be added to the set of tokens 100 at the corresponding unmasked position. For example, for a 5x5 grid, where the origin is the top-left-most position, the unmasked token 120b may be added to the set of tokens 100 at position (1, 1). In this example, the unmasked token 120f may be added to the set of tokens 100 at position (4, 3). In this example, the unmasked token 120g may be added to the set of tokens 100 at position (0, 4). Any unmasked tokens that are input at that iteration may be assigned a maximum confidence score (e.g. a confidence score of "1").

According to an implementation, the method comprises, after the plurality of iterations 110a - 110c, decoding the set of tokens 100 using a decoder neural network to generate predicted data. The predicted data may be image data, video data, audio data, or some other form of data.

For instance, in one implementation, the method is for image generation, the tokens 100 are embedded image features, and the decoder neural network is configured decode the set of tokens 100 to output one or more images. The method may implement image synthesis based on an input of completely masked tokens and, optionally, based on an input context. Alternatively, the method may perform image generation (e.g. completion) based on an input including unmasked tokens 120a - 120h and masked tokens. The image generation may complete an image based on a partial portion of the image, or may expand an input image to a larger size (image extrapolation). In addition, certain portions of an input image may be replaced, by masking a portion of the input image, and regenerating the masked portion.

In another implementation, the method is for video generation, the tokens 100 are embedded video features, and the decoder neural network is configured decode the set of tokens 100 to output one or more frames of a video. For instance, a video may comprise a series of frames. These frames may be encoded into a series of tokens. The tokens for each frame may be concatenated to form a sequence representing the video. The methods described herein can therefore be performed either on tokens representing individual frames, or on tokens representing a series of frames. The methods may include video synthesis based on an input of completely masked tokens and, optionally, based on an input context. Alternatively, the method may perform video generation (e.g. completion) based on an input including unmasked tokens 120a - 120h and masked tokens. The image generation may complete a video based on a partial portion of the video, or may expand an input video to a larger size (video extrapolation), either in terms of frame dimension, or time dimension (e.g. the number of frames). For instance, a set of input frames may be encoded to form the set of input tokens, and masked tokens may represent earlier, later and/or intervening frames to be predicted by the token prediction neural networks 110a - 110c. By predicting intervening frames, the temporal resolution of video data may be increased.

Alternatively, or in addition, one or more portions of one or more frames may be masked for prediction. Accordingly, by masking a portion of one or more input frames, the one or more masked portions may be regenerated.

In another implementation, the method is for audio generation, the tokens 100 are embedded audio features, and the decoder neural network is configured decode the set of tokens to output audio data. Audio may be embedded by virtue of a spectrogram. A spectrogram may represent audio data as an image. The different frequencies of data may be plotted on one axis (e.g. the y-axis), and time may be plotted on another axis (e.g. the x-axis). The amplitude of a given frequency at a given time may be represented in the spectrogram as a given colour and/or brightness at the corresponding position within the spectrogram for that frequency and time. Accordingly, when obtaining an input set of tokens 100, audio data may be converted into a spectrogram, which may then be encoded into tokens. When generating an output, tokens may be decoded into an image representing a spectrogram, which may then be converted into audio data.

A spectrogram represents audio as an image. Accordingly, similar methodology to the image processing described above may be applied to audio processing. For instance, audio may be synthesised based on an input of completely masked tokens and, optionally, based on an input context. Alternatively, the method may perform audio generation (e.g. completion) based on an input including unmasked tokens and masked tokens. The audio generation may complete audio based on a partial portion of the audio, or may expand audio to a larger size (audio extrapolation), either in terms of frequency range, or time (e.g. the length of the audio). For instance, an input audio spectrogram may be encoded to form the set of input tokens, and masked tokens may represent audio at earlier, later or intervening time periods to be predicted by the token prediction neural networks. By predicting intervening time period(s), the temporal resolution of audio data may be increased.

Alternatively, or in addition, one or more portions of the spectrogram may be masked for prediction. Accordingly, by masking a portion of the spectrogram, the one or more masked portions may be regenerated.

According to an implementation, the token prediction neural networks form a series of nested token prediction neural networks 110a - 110c including a master token prediction neural network 110c and one or more smaller token prediction neural networks 110a, 110b, wherein each smaller token prediction neural network in the series is progressively smaller than the immediately preceding token prediction neural network in the series. Each smaller token prediction neural network may be formed of a subset of parameters of the immediately preceding token prediction neural network in the series.

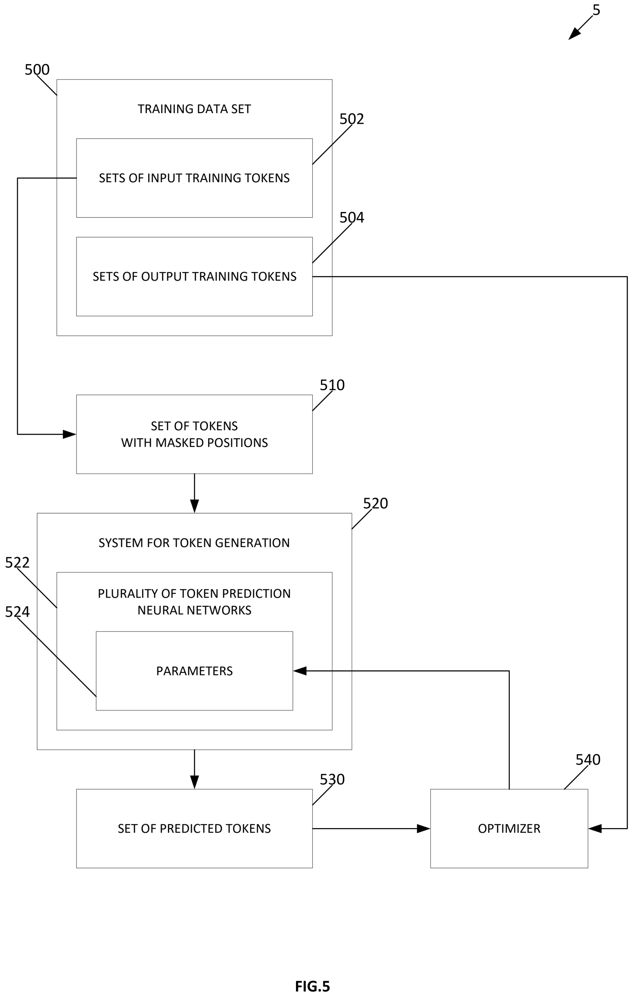

FIG.5 depicts an example training system 5 for training a system 1 for token generation in accordance with the techniques described herein.

The example training system 5 trains the example system 1 using a training data set 500. The training data set 500 comprises sets of input training tokens 502 and corresponding sets of output training tokens 504. For example, the training data set 500 may comprise sets of partially or completely masked images, video, or audio and corresponding sets of reconstructed images, video, or audio - "training inputs" and a corresponding "ground truth". Each of the sets of input training tokens 502 may include one or more positions that are masked. Alternatively, each set of input training tokens 502 may be masked retrospectively during training. In other words, a set of tokens 510 analogous to the set of tokens 100 described with reference to FIG.1 may be formed, e.g. from the training data set 500 directly or by masking example inputs in a pre-processing step.

The example training system 5 may train a system 520 for token generation (e.g. analogous to the example system 1 described above). The system 520 may comprise a plurality of token prediction neural networks 520 for training (e.g. analogous to the token prediction neural networks 110a - 110c described above). That is, the system 520 may receive, as the first input to a first one of the plurality of token prediction neural networks 522, the set of tokens 510 with one or more positions masked. The first one of the plurality of token prediction neural networks 522 may be the first token prediction neural network 110a depicted in FIG.1. The system 520 may, for each of a plurality of iterations, generate a predicted token for each masked position in the input set of tokens 510, select predicted token(s) for inclusion into the set of tokens 510, and update the set of tokens 510 so that the respective selected predicted token becomes unmasked at the corresponding masked position, as previously described with reference to FIG.1 The output from the system 520 for each set of input training tokens 502 may be a set of predicted tokens 530 (e.g. representing a predicted, reconstructed image, such as the set of predicted tokens output in the third iteration 140c of FIG.1 representing an image of a bird). The same method described above with reference to FIG.4 may be repeated for each set of the sets of input training tokens 502 to generate multiple sets of predicted tokens 530 for their corresponding sets of input training tokens 502.

It will be readily appreciated based upon the disclosure provided herein that, rather than generating a single set of predicted tokens 530 for each set of input training tokens 502, the system for token generation 520 may generate multiple sets of predicted tokens 530 (not depicted) during training. For example, the multiple sets of predicted tokens 530 may be analogous to predicted tokens 120a - 120h generated for each iteration 140a - 140b using a different size token prediction neural network 110a - 110c. The multiple sets of predicted tokens 530 may enable training using a distillation loss component, as discussed below. In examples, each of the plurality of token prediction neural networks 522 may generate a different set of predicted tokens 530 by processing the same set of tokens with masked positions 510. Generating each set of predicted tokens 530 for every one of the plurality of token prediction neural networks 522 may include processing the same set of tokens with masked positions 510 over one or more iterations. In experiments, during training, only a single iteration for each of the plurality of token prediction neural networks 522 was used. Accordingly, each of the multiple sets of predicted tokens 530 (not depicted) may be used, in specific examples, to compute the distillation loss component, which is discussed in greater detail below. Of course, training can occur using a multiplicity of different training schemes. Generally, after each of the multiple sets of predicted tokens 530 are generated (e.g. for every group of iterations 140a - 140c), the optimizer 540 may compute a loss value using the multiple sets of predicted tokens 530 and the set of output training tokens 504 (e.g. ground truth). This process may then be repeated for each different set of the sets of input training tokens 502.

Put another way, during training, there may be one (or more) iterations for each different size of token prediction neural network 110a - 110c using the same input 510, 100 to generate multiple outputs 530 for each different size model. The multiple outputs 530 may each be used, alongside the respective set of output tokens 504, by the optimizer 540 to compute a loss value for updating the parameters 524 of the plurality of token prediction neural networks 522. It will be apparent that such use of the respective set of output tokens 504 and the multiple outputs 530 may be used by the optimizer 530 to perform distillation. The same process may be repeated for one or more training steps (e.g. each training step using a different set of the sets of input training tokens 502 as the set of tokens with masked positions 510). Training may occur in batches of sets of input training tokens 502 and may occur over multiple epochs (e.g. multiple iterations of training with the same training data set 500).

In a specific example, for distillation, multiple loss values may be computed by the optimizer 540 for each different token prediction neural network of the plurality 522. In this specific example, the multiple loss values may be compared by the optimizer 540 in any suitable way to compute a distillation loss component, as discussed in further detail below.

According to an implementation, the method further comprises after the plurality of iterations 110a - 110c (e.g. after generating the set of predicted tokens 530 for each iteration), training the token prediction neural networks 522, 110a - 110c based on a set of training tokens to adjust parameters 524; 212, 214, 216, 222, 224, 226 of the token prediction neural networks 522; 110a - 110c. For example, an optimizer 540 (e.g. as implemented by a computer program) may compute a loss value, for each set of the sets of input training tokens 502, based upon (i) the set of output training tokens 504 associated with the respective set of input training tokens 502 and (ii) the set of predicted tokens 530 generated for the same set of input training tokens 502. The training may maintain the nested structure of the token prediction neural networks 522; 110a - 110c. Accordingly, updates may be applied to the master token prediction neural network 110c, which may then be utilised by the smaller token prediction neural networks 110a, 110b.

The training may be based on a loss function that includes: for the master token prediction neural network 110c (e.g. one of the plurality of token prediction neural networks 522), a ground truth loss component that determines a ground truth loss based on the training tokens 504 and the predicted tokens 530 output by the master token prediction neural network 110c; and for each smaller token prediction neural network 110a, 110b, a distillation loss component that determines a distillation loss for the smaller token prediction neural network (e.g. 110a is smaller with respect to 110b; 110b is smaller with respect to 110c) based on the predicted tokens output by the smaller token prediction neural network and the predicted tokens output by the immediately preceding token prediction neural network in the series. For example, the set of predicted tokens 530 may alternatively or in addition include sets of predicted tokens 530 generated at intermediate (i.e. non-final) iterations with the system 520, such as the first and second iterations 140a, 140b described above with reference to FIG.1. In the intermediate iterations, the set of predicted tokens 530 may include unmasked tokens 120b, 120f, 120g for the first iteration 140a and unmasked tokens 120a - 120h for the second iteration 140b. In this example, with reference to FIG.1, the distillation loss for the smaller token prediction neural networks 110a (with respect to 110b) may be based upon (i) the predicted tokens 530 output by the first token prediction neural network 110a in the first iteration 140a and (ii) the predicted tokens 530 output by the second token prediction neural network 110b in the second iteration 140b. In other words, in examples, the smaller token prediction neural network (e.g. 110a) may learn from the output of the next larger token prediction neural network (e.g. 110b). The loss function may further include, for each smaller token prediction neural network, a ground truth loss component that determines a ground truth loss based on the training tokens and the predicted tokens output by the smaller token prediction neural network. A smaller token prediction neural network may be a distilled token prediction neural network. In some implementations, the loss function may be defined according to:

$$L_{train} = \frac{1}{N}\left(L(m_N(X), Y) + \sum_{i=1}^{N-1} \alpha_i L(m_i(X), Y) + (1 - \alpha_i)L(m_i(X), m_{i+1}(X))\right)$$

where X represents the input set of tokens 510, Y represents a set of output training tokens from the sets of output training tokens 504 corresponding to the input set of tokens 510, $\alpha_i$ represents a weighting factor for weighting the distillation loss component and the ground truth loss component, $m_N$ represents the master token prediction neural network 110c (e.g. the largest neural network in the nested structure), $m_i$ represents one of the smaller token prediction neural networks (e.g. 110a, 110b), and where $L(m_N(X), Y)$ represents a difference between the set of predicted tokens 530 and the set of output training tokens corresponding to the input set of tokens 510. In examples, the optimizer 540 may implement the foregoing loss function, calculate the loss value, and update the parameters 524 of the plurality of token prediction neural networks 522. In some examples, a stop gradient function is applied to $m_{i+1}$. In some examples, the stop gradient function prevents gradients being computed, and thus backpropagated for updating the parameters 524, for the larger, teacher token prediction neural network $m_{i+1}$ during distillation (e.g. parameters 214, 224 may be "frozen" for computing the distillation loss component for the first token prediction neural network 110a with respect to the second token prediction neural network 110b). In some examples, $\alpha_i$ is decayed (e.g. linearly or parametrically) during training from a value of 1 to 0.

Aspects of the foregoing training regime addresses the problem of efficiently and effectively training multiple nested token prediction neural networks 522 simultaneously without performance degradation in the smaller networks. By using a distillation loss component, the next-largest token prediction neural network may be analogous to a "teacher" model for each smaller "student" model (e.g. "progressive distillation") which provides a stable and consistent learning signal throughout the series of token prediction neural networks 522. The distillation loss guides the smaller neural networks to mimic the internal representations of preceding token prediction neural networks in the series (e.g. the larger models, which may be more capable), thereby ensuring that the learned parameter subsets for each respective smaller neural network are not only individually optimal but also hierarchically consistent.

Accordingly, different loss functions may be applied to different subsets of the parameters of the master token prediction neural network 110c. As the smaller token prediction neural networks 110a, 110b are subsets of the master token prediction neural network 110c, any update to the parameters 524 of the token prediction neural networks 522 may be applied to the master token prediction neural network 110c, which will then be cascaded to the smaller token prediction neural networks 110a, 110b by virtue of the nested structure.

For instance, the master token prediction neural network 110c may be divided into different subsets of parameters, with each subset of the parameters being used by a different subset of the token prediction neural networks. Each subset of parameters may be updated based on a distillation loss for each smaller token prediction neural network that makes use of the subset of parameters, a ground truth loss for the master token prediction neural network, and optionally, a ground truth loss for each smaller token prediction neural network that makes use of the subset of parameters. An example of a division of the master token prediction neural network 110c is described above with reference to FIG.2.

For instance, the master token prediction neural network 110c may comprise a first set of parameters 216, 226 used by the master token prediction neural network 110c, a second set of parameters 212, 222 used by the master token prediction neural network 110c and a smallest token prediction neural network 110a, a third set of parameters 214, 224 used by the master token prediction neural network 110c, the smallest token prediction neural network 110a, and the second smallest token prediction neural network 110b, and so on. In this case, training the token prediction neural networks 522 may comprise, updating the first subset 216, 226 of parameters based on a first ground truth loss (for the master token prediction neural network 110c), updating the second subset of parameters 212, 222 based a first distillation loss (for the smallest token prediction neural network 110a) and optionally based on a second ground truth loss (for the smallest token prediction neural network 110a) and, updating the third subset of parameters 214, 224 based on a second distillation loss (for the second smallest token prediction neural network 110b) and optionally based on a third ground truth loss (for the second smallest token prediction neural network 110b), and so on.

A ground truth loss for a given token prediction neural network (e.g. a given subset of parameters) may represent a difference between one or more predicted tokens 530 output by the token prediction neural network 110a - 110c (e.g. by the given set of parameters) and one or more corresponding training tokens for the one or more corresponding positions in the set of tokens 510. Each training token may represent a ground truth input (e.g. a token generated from an encoding to a training input, such as a training image, a training video or training audio). The training data may also include training context.

A distillation loss for a given smaller token prediction neural network 110a, 110b (e.g. a given subset of parameters corresponding to the smaller token prediction neural network) may represent a difference between one or more predicted tokens 530 output by the smaller token prediction neural network 110a, 110b (the student token prediction neural network) and one or more corresponding predicted tokens 530 output by a teacher token prediction neural network (e.g. by the corresponding subset of parameters for the teacher token prediction neural network) for the same one or more positions (e.g. the same one or more masked locations). In a specific example, with reference to FIG.1, the first token prediction neural network 110a may be the student network and the second token prediction neural network 110b may be the teacher network. The teacher token prediction neural network may be a token prediction neural network 110a - 110c that is larger than the student token prediction neural network. For instance, for each smaller token prediction neural network 110a, 110b, the next largest token prediction neural network in the set of token prediction neural networks may be used as the teacher token prediction neural network (e.g. the next largest for the first and second token prediction neural networks 110a, 110b may be the second and third token prediction neural networks 110b, 110c respectively). Accordingly, each smaller token prediction neural network 110a, 110b may be a distilled token prediction neural network that is trained through knowledge distillation. By utilizing the next largest token prediction neural network as the teacher, the gap between student and teach size is reduced (e.g. relative to using the master neural network as the teacher), thereby improving distillation performance.

The training may be performed over a plurality of training steps, and a weighting (e.g. $\alpha_i$, as described above) between the ground truth loss components and the distillation loss components may be adjusted over the plurality of training steps to reduce the influence of the ground truth loss components and increase the influence of the distillation loss components on the updates for the smaller token prediction neural networks.

This progressive and adaptive weighting provides advantages during training. Initially, by prioritizing the ground truth loss component, all nested token prediction neural networks 110a - 110c, including specifically the smaller token prediction neural networks 110a, 110b, may be weighted to the ground truth. As training progresses and the larger token prediction neural networks 110b, 110c become more accurate, the weighting may shift toward the distillation loss component. This allows the smaller token prediction neural networks 110a, 110b to be fine-tuned and regularized by the richer, more stable output distributions of their larger, "teacher" counterparts. By regularizing the smaller token prediction neural networks 110a, 110b in this way, the result is faster convergence and more robust smaller sub-networks which are more accurate than if they were trained solely on the ground truth loss, directly contributing to improved accuracy and efficiency during inference.

Nevertheless, alternative training methods to knowledge distillation may be implemented. For instance, the set of token prediction neural networks 522 may be trained based on a ground truth loss function without any distillation loss function. For instance, a ground truth loss function may be applied to the outputs of each token prediction neural network to determine corresponding ground truth losses. A total loss may be determined based on the ground truth losses, for instance, as an average of the ground truth losses.

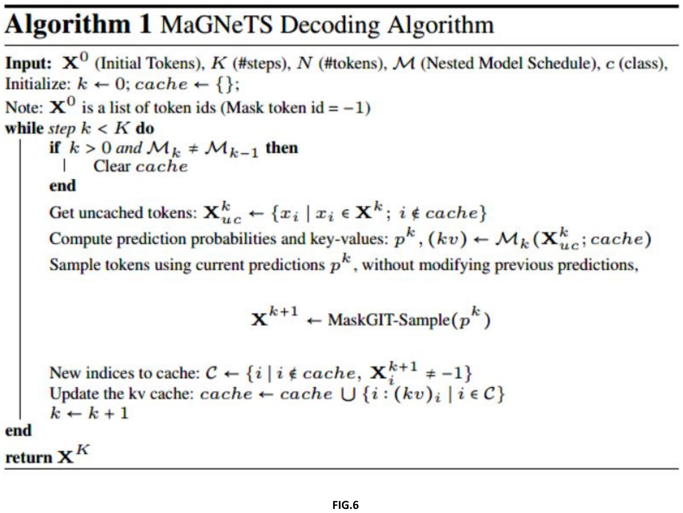

FIG.6 depicts an example algorithm for token generation in accordance with the techniques described herein. The example algorithm may be implemented for decoding one or more output tokens from a set of input tokens 100.

$X^0$ represents the set of tokens 100 at the first iteration 140a. K represents the number of the plurality of iterations 140a - 140c, which may be three in the specific example depicted in FIG.1. N represents the number of tokens (e.g. 25 in the example depicted in FIG.1). M represents the model schedule (e.g. for the first group including the first iteration 140a use the first token prediction neural network 110a, for the second group including the second iteration 140b use the second token prediction neural network 110b, and so on). c represents a class for class-based conditional generation (e.g. a class corresponding to types of real-world images).

The example algorithm includes a plurality of iterations for the number, K. At each iteration, the cache 160 may be refreshed if the next token prediction neural network is different from the previous token prediction neural network at the previous iteration (e.g. when the group changes and the token prediction neural network increases in size). At each iteration, with reference to FIG.4, confidence scores, $p^k$, are computed for masked tokens using attention features 300a, 300b retrieved from the cache 160 for previously unmasked tokens and based upon the input set of tokens 100 (e.g. the initial input $X^0$ or from the previous iteration). At each iteration, the confidence scores, $p^k$, may be used to select the predicted tokens for inclusion into the set of input tokens 100 and update the set of input tokens 100 for the next iteration.

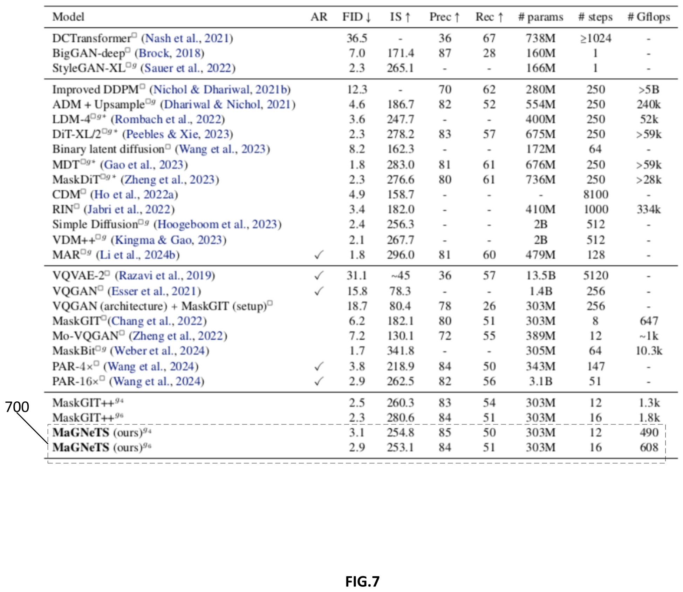

FIG.7 depicts a first set of experimental results for an example system for token generation in accordance with the techniques described herein. The first set of experimental results includes results for a plurality of different models for token generation. The plurality of different models includes Masked Generate Nested Transformers with Decode Time Scaling (MaGNeTS) in accordance with the techniques described herein. The results were for each of the plurality of different models completing a task of class-conditional image generation (i.e. generating real-world images of a particular class). The results include a quality metric (Fréchet Inception Distance (FID)) and a corresponding number of floating-point operations (FLOP) to achieve that quality. The quality metric indicates the quality of the generated image (a low FID score generally indicates a high quality). The higher the number of floating-point operations, the greater the computational complexity. As mentioned above, the techniques described herein enable, for example, image, audio, and video generation with significant reductions in computational complexity. The results 700 for MaGNeTS in accordance with the techniques described herein achieved a relatively low FID score (i.e. indicating high quality generated images) with significantly reduced FLOPs. In other words, MaGNeTS achieved an optimal balance between task accuracy and computational expense.

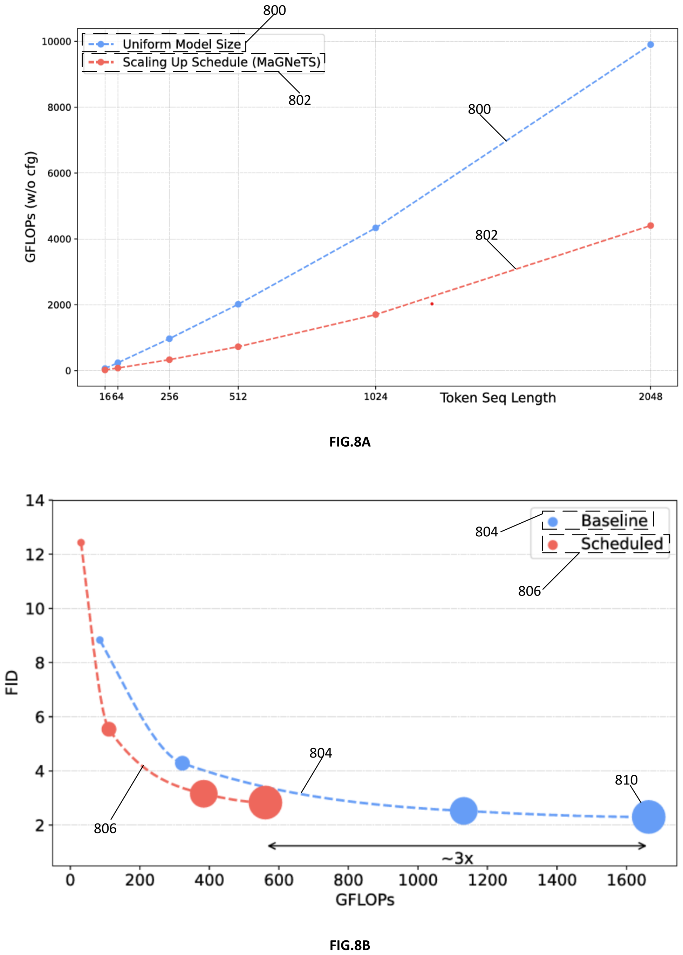

FIG.8A depicts a second set of experimental results for an example system for token generation in accordance with the techniques described herein. The second set of experimental results compare a baseline token prediction neural network (MaskGIT) of uniform size (i.e. without varying size across iterations) to the use of a plurality of token prediction neural networks 110a - 110c (MaGNeTS token prediction neural network) in accordance with the techniques described herein. The baseline results 800 for the baseline token prediction neural network showed an increase in the number of FLOPs (i.e. increased computational complexity) across every different sequence length for the input set of tokens 100 (e.g. 25 for a 5x5 grid of input tokens 100). The second set of experimental results show that improvements in computational complexity occur irrespective of input sequence length and that the improvements in computational complexity increase substantially as input sequence length increases. For example, with a token sequence length of 2048, the number of FLOPs for the baseline token prediction neural network are approximately 10,000 GFLOPs compared to approximately 4,200 for the MaGNeTS token prediction neural network operating the same task for 12 decoding iterations.

FIG.8B depicts a third set of experimental results for an example system for token generation in accordance with the techniques described herein. The third set of experimental results include baseline results 804 for the baseline token prediction neural network and results 806 for the MaGNeTS token prediction neural network. The results compare the baseline token prediction neural network to the MaGNeTS token prediction neural network for four different parameter sizes. The size of the data point (e.g. example data point 810) indicates the parameter size of the neural network (e.g. the number of parameters of the master token prediction neural network 110c or the number of parameters of the baseline token prediction neural network). For each different parameter size, the computational complexity was less for the MaGNeTS token prediction neural network than the baseline token prediction neural network. Specifically, for the largest parameter size tested, using the MaGNeTS token prediction neural network compared to using the baseline token prediction neural network reduced FLOPs and thus computational complexity by approximately 3 times whilst achieving a substantially equivalent quality metric.

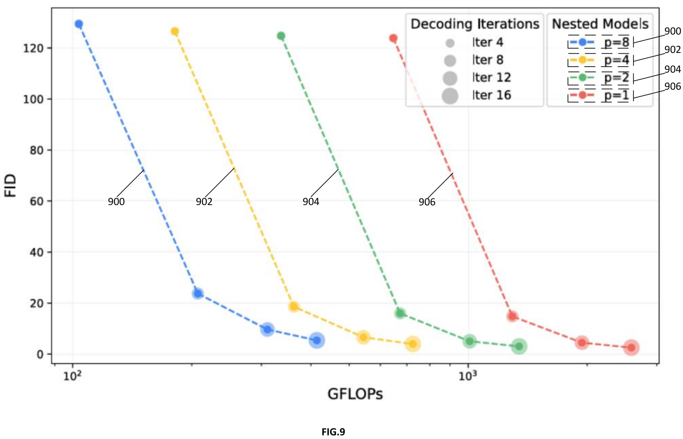

FIG.9 depicts a fourth set of experimental results for an example system for token generation in accordance with the techniques described herein. The fourth set of experimental results, for the MaGNeTS token prediction neural network, include a first set of results 900, a second set of results 902, a third set of results 904, a fourth set of results 906 for different downscaling factors, p. The downscaling factor is a factor by which the size (e.g. parameter size) is reduced for each group of iterations. The first, second, third, and fourth results 900, 902, 904, 906 were for downscaling factors 8, 4, 2, 1 respectively. A downscaling factor of 2 may reduce the size of the token prediction neural network by half between each group of iterations. A downscaling factor of 1 may not reduce the size of the token prediction neural network across iterations. For the fourth set of experimental results, the downscaling factors caused linear scaling, however other scaling (e.g. parameteric scaling) methods may be used. Each set of results 900, 902, 904, 906 include a result for 4, 8, 12, and 16 decoding iterations (as indicated by the size of the respective data points). As depicted in FIG.9, as the downscaling factor, p, increases, the number of FLOPs decrease significantly. For this decrease in FLOPs, the fourth set of results indicate only relatively small effect on the FID quality metric for each different number of decoding iterations tested (i.e. 4, 8, 12, 16 iterations). Thus, using a downscaling factor (e.g. a downscaling factor of 8, 4, or 2) may improve computational efficiency irrespective of the number of decoding iterations.

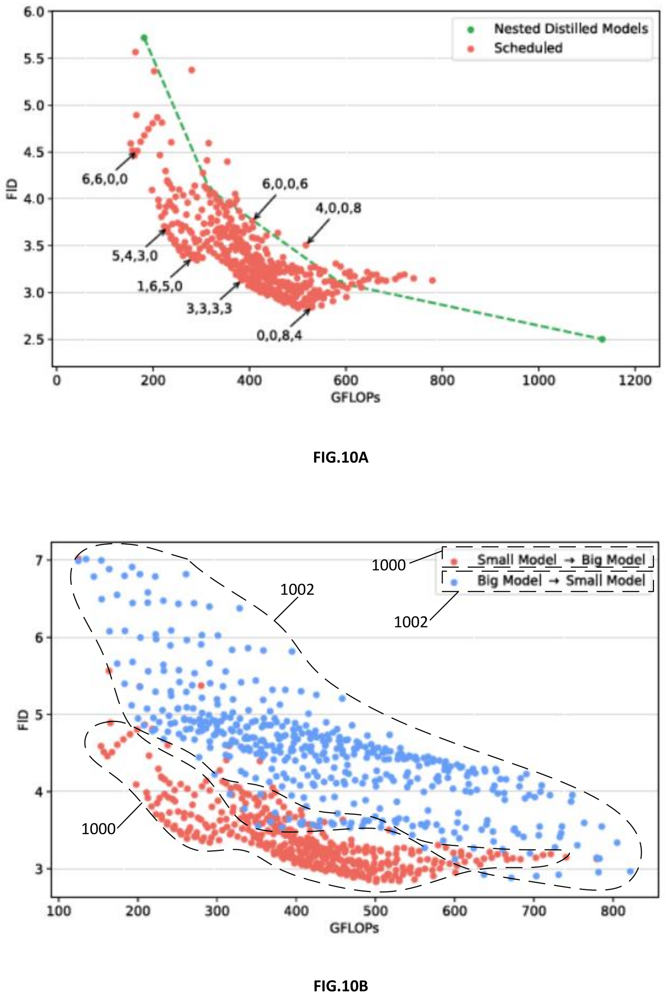

FIG.10A depicts a fifth set of experimental results for an example system for token generation in accordance with the techniques described herein. The fifth set of experimental results again show the quality metric plotted against FLOPs. The results were plotted for different schedule options for the plurality of token prediction neural networks 110a - 110c. That is, a schedule option may include a set of numeric values each indicating a number of iterations for a respective group of the plurality of iterations 140a - 140c - i.e. a number of iterations with a respective token prediction neural network of the plurality of token prediction neural networks. For example, a schedule option of (3, 3, 3, 3) may indicate 3 iterations with each token prediction neural network of a master token prediction neural network that comprises three smaller token prediction neural networks. In another example, a schedule option of (0, 0, 8, 4) may indicate 0 iterations with the two smallest token prediction neural networks, 8 iterations with the third smallest token prediction neural network, and 4 iterations with the master token prediction neural network. The fifth set of experimental results were for a master token prediction neural network 110c that used a downscaling factor of 8, 4, 2, and 1 for each token prediction neural network of the master network (e.g. the smallest token prediction neural network included 1/8th of the parameters of the master token prediction neural network).

The schedule options with the best trade-off between quality and computational efficiency may be, as reflected in FIG.10A, the schedule options with the least abrupt token prediction neural network transitions/change. An abrupt token prediction neural network transition may include skipping and/or not performing iterations with intermediate token prediction neural networks, such as performing 6 iterations with the smallest token prediction neural network and performing 6 iterations with the master token prediction neural network, but not performing any iterations with token prediction neural networks that comprise (i) a superset of the parameters of the smallest token prediction neural network and (ii) a subset of the parameters of the master token prediction neural network. Selecting schedule options with smooth transitions (e.g. without zero-options for intermediate sub-networks) thus further optimizes computational efficiency.

FIG.10B depicts a sixth set of experimental results for an example system for token generation in accordance with the techniques described herein. The sixth set of experimental results were generated for two configurations of a plurality of token prediction neural networks. The first configuration 1000 included using a plurality of groups of one or more iterations where a size of the token prediction neural network increases with each subsequent group. The second configuration 1002 included using a plurality of groups of one or more iterations where a size of the token prediction neural network decreases with each subsequent group. The first configuration 1000, as depicted in FIG.10B, demonstrated better results than the second configuration 1002 for an image generation task. Thus, increasing a size of the token prediction neural network for each subsequent group of iterations is shown empirically to directly lead to improved computational efficiency with good on-task accuracy. Of course, as discussed above, other configurations (e.g. analogous to the second configuration 1002, for a different task, such as an alignment-based task that many require significant alignment) where the size of the token prediction neural network decreases with each subsequent group may exhibit the optimal balance between computational efficiency and accuracy.

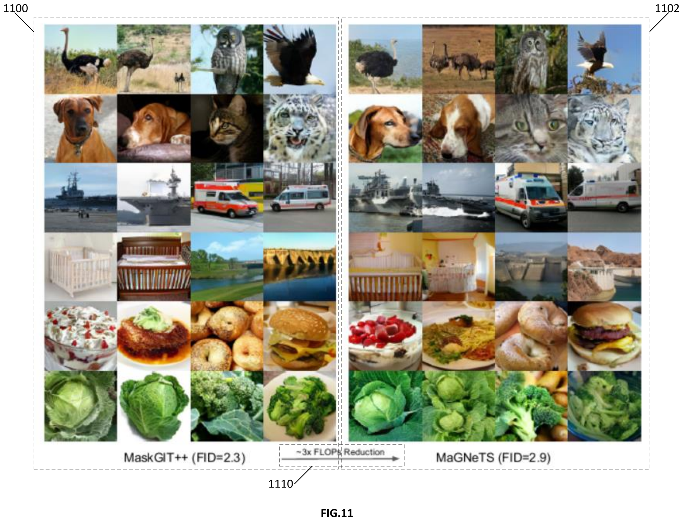

FIG.11 depicts a seventh set of experimental results for an example system for token generation in accordance with the techniques described herein. The seventh set of experimental results include a first set 1100 of output images generated by a baseline token prediction neural network (MaskGIT++) and a second set 1102 of output images generated by a MaGNeTS token prediction neural network in accordance with the techniques described herein. The images generated by both the baseline and MaGNeTS token prediction neural networks were evaluated using empirical and standardized benchmarking techniques to arrive at a quality metric, which was similar for both sets 1100, 1102 of output images (i.e. 2.3 for the first set 1100 and 2.9 for the second set). At the same time, a performance improvement 1110 including a 3x reduction of floating-point operations for the MaGNeTS token prediction neural network was observed when compared to the baseline token prediction neural network. Thus, the plurality of token prediction neural networks 110a - 110c described herein may effectively achieve a task (e.g. generating real-world images) whilst significantly reducing computational complexity. The reduction in computational complexity may allow implementation of the plurality of token prediction neural networks on edge devices, which otherwise may not be possible. Generating real-world images has many applications such as training other neural networks to classify images, video, or audio of the real-world or control devices in the real-world.

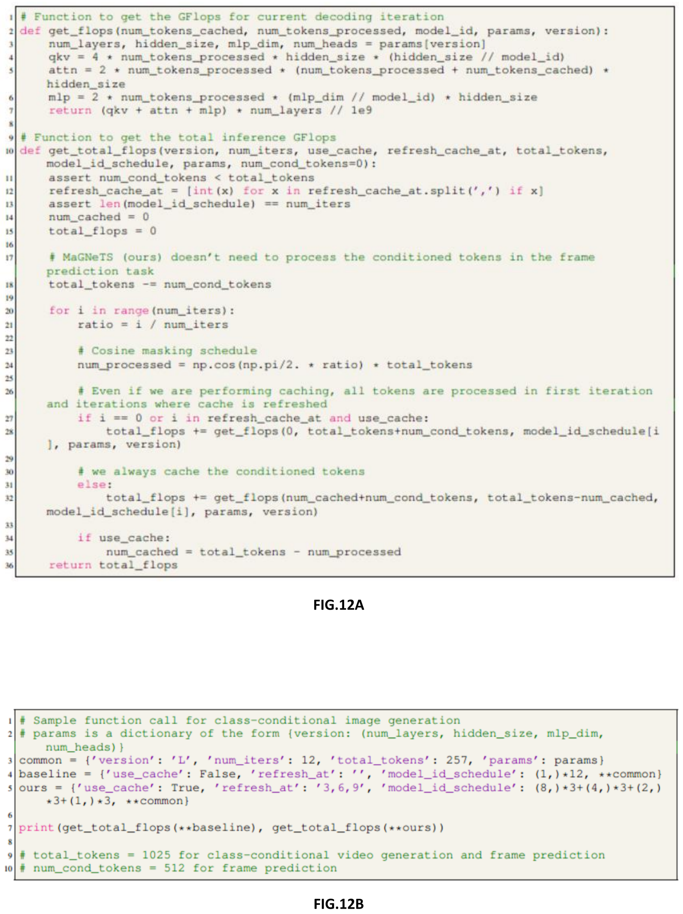

FIG.12A depicts first programming code for calculating inference-time floating point operations (FLOPs) of an example system for token generation in accordance with the techniques described herein. FIG.12B depicts second programming code for calculating inference-time floating point operations (FLOPs) of an example system for token generation in accordance with the techniques described herein. The first programming code and the second programming code is written in Python code. The programming code provides functionality that allowed for the production of the first to seventh set of experimental results. FIG.12A depicts two functions: (i) get_flops() and (ii) get_total_flops(). The first function get_flops() performs calculations to generate the number of giga FLOPs for a particular decoding iteration (e.g. the first iteration 140a). The second function get_total_flops() performs calculations to generate the number of giga FLOPs for an entire sequence of decoding iterations 140a - 140c. The first function, get_flops, includes a calculation of the FLOPs for generating queries, keys, values 300, and attention activations with attention layer(s) 220, in addition to the FLOPs incurred using fully connected layer(s) 210. The second function, get_total_flops, includes a calculation of total inference FLOPs for the entire multi-step decoding process by iteratively calling the first function, get_flops, for each iteration 140a - 140c. For each iteration 140a - 140c, it determines the number of input tokens 100 to be processed based on a cosine masking schedule and selectively calls the first function based upon whether the current step includes a refresh of the cache 160. The second function therefore bases its calculation of FLOPs on whether the current iteration involves processing all tokens (e.g. for a first iteration of a respective group of iterations) or where only uncached tokens are processed (e.g. for subsequent iterations of a respective group of iterations). The second function accumulates the FLOPs from each call of the first function to return a final total calculation for the number of FLOPs for an entire sequence of decoding iterations 140a - 140c. The second programming code depicted in FIG.12B includes a function call to the second function, get_total_flops, for both the baseline token prediction neural network and the MaGNeTS token prediction neural network in accordance with the techniques described herein, for comparison, evaluation, and to product the first to seventh set of experimental results.

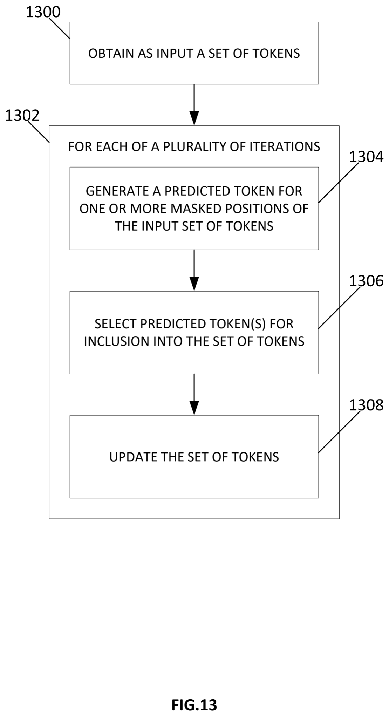

FIG. 13 depicts a flow diagram of a method for token generation.

At step 1300, the method comprises obtaining as an input a set of tokens where one or more positions of the input set of tokens are masked for prediction

At step 1302, the method comprises steps 1304, 1306, and 1308 for each of a plurality of iterations.

At step 1304, the method comprises generating a predicted token for each masked position in the set of tokens by inputting the set of tokens into a token prediction neural network for the iteration

At step 1306, the method comprises selecting one or more predicted tokens for inclusion into the set of tokens.

At step 1308, the method comprises updating the set of tokens so that, for each selected predicted token, the selected predicted token becomes an unmasked token at the corresponding masked position in the set of tokens.

The plurality of iterations comprise a plurality of groups of one or more iterations. A different token prediction neural network is used for each group. A size of the token prediction neural network increases with each subsequent group.

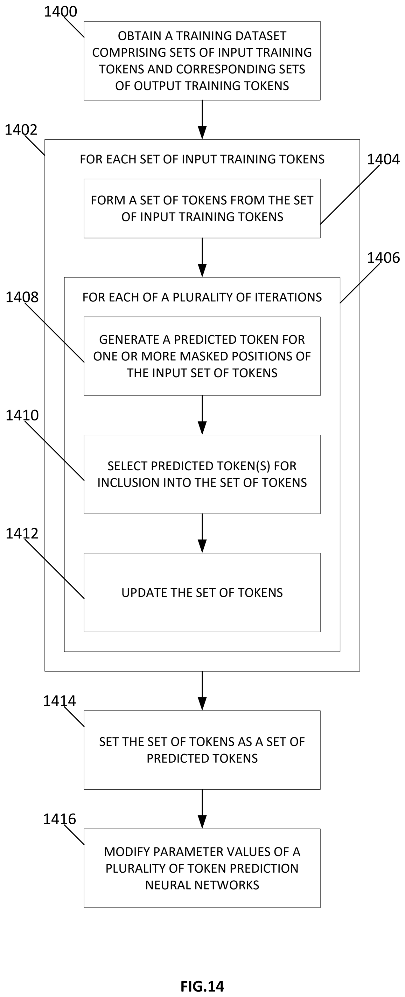

FIG.14 depicts a flow diagram of a method for training a system for token generation.

At step 1400, the method comprises obtaining a training data set comprising sets of input training tokens and corresponding sets of output training tokens.

At step 1402, the method comprises steps 1404 and 1406 for each set of input training tokens.

At step 1404, the method comprises forming a set of tokens from the set of input training tokens, wherein one or more positions of the set of tokens are masked.

At step 1406, the method comprises steps 1408, 1410, and 1412 for each of a plurality of iterations.

At step 1408, the method comprises generating a predicted token for each masked position in the set of tokens by inputting the set of tokens into a token prediction neural network for the iteration.

At step 1410, the method comprises selecting one or more predicted tokens for inclusion into the set of tokens.

At step 1412, the method comprises updating the set of tokens so that, for each selected predicted token, the selected predicted token becomes an unmasked token at the corresponding masked position in the set of tokens.

At step 1414, the method comprises, after the plurality of iterations, setting the set of tokens as a set of predicted tokens for the set of input training tokens.

At step 1416, the method comprises modifying parameter values of the token prediction neural networks based on the sets of predicted tokens and the corresponding sets of output training tokens.

The plurality of iterations comprise a plurality of groups of one or more iterations. A different token prediction neural network is used for each group. A size of the token prediction neural network increases with each subsequent group.

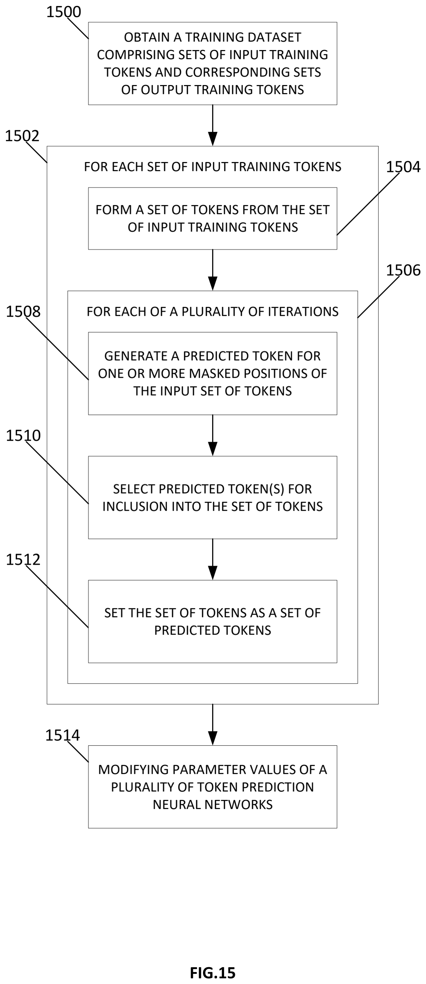

FIG.15 depicts a flow diagram of a method for training a system for token generation.

At step 1500, the method comprises obtaining a training data set comprising sets of input training tokens and corresponding sets of output training tokens. At step 1502, the method comprises, for each set of input training tokens, step 1504 and step 1506.

At step 1504, the method comprises forming a set of tokens from the set of input training tokens. One or more positions of the set of tokens are masked. At step 1506, the method comprises, for each of a plurality of iterations, step 1508, step 1510, and step 1512.

At step 1508, the method comprises generating a predicted token for each masked position in the set of tokens by inputting the set of tokens into a token prediction neural network for the iteration.

At step 1510, the method comprises selecting one or more predicted tokens for inclusion into the set of tokens.

At step 1512, the method comprises setting the set of tokens as a set of predicted tokens for the set of input training tokens. The set of predicted tokens comprise, for each selected predicted token, the respective selected predicted token as an unmasked token at the corresponding masked position in the set of predicted tokens.

At step 1514, the method comprises modifying parameter values of the token prediction neural networks based on the sets of predicted tokens generated at each iteration and the corresponding set of output training tokens.

The plurality of iterations comprise a plurality of groups of one or more iterations. A different token prediction neural network is used for each group. A size of the token prediction neural network increases with each subsequent group.

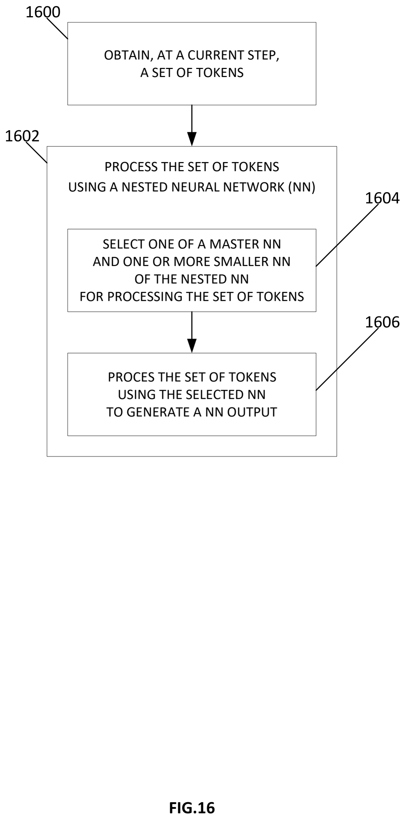

FIG.16 depicts a flow diagram of a method for performing a multi-step task.

At stage 1600, the method comprises obtaining, as an input, at a current step in the multi-step task, a set of tokens.

At stage 1602, the method comprises processing, at the current step, the set of tokens using a nested neural network to generate a neural network output.

The nested neural network comprises a series of (i) a master neural network and (ii) one or more smaller neural networks. Each smaller neural network in the series is made up of a corresponding subset of parameters of both the master neural network and each preceding smaller neural network in the series.

At stage 1602, processing the set of tokens using the nested neural network to generate the neural network output at the current step comprises stage 1604 and stage 1606.

At stage 1604, the method comprises selecting one of (i) the master neural network and (ii) the one or more smaller neural networks for processing the set of tokens

At stage 1606, the method comprises processing the set of tokens using the selected neural network to generate the neural network output.

The selection is based upon the selected neural network being adjacent to one of the neural networks of the series used in a previous step of the multi-step task preceding the current step.

In accordance with the detailed description provided above, the techniques described herein may be applied to any multi-step task (e.g. image, video, or audio generation, such as tasks implementing diffusion, or indeed agent-based tasks performed over multiple iterations). That is, a neural network processing an input at a previous step of the multi-step task may inform which neural network of the same nested series is used to process an input at a current step of the multi-step task. The selected neural network may comprise a super-set or a sub-set of parameters of the neural network used in the previous step, e.g. by virtue of the neural network being nested and the selection being based upon adjacency. In general, selecting one of the nested neural networks based upon its adjacency to a previous neural network in the same nested series confers many advantages - i.e. increasing or decreasing in size neural networks is advantageous. For example, many multi-step tasks such as image, video, or audio generation benefit from front-loading neural networks that exhibit either higher accuracy or lower accuracy (e.g. high-computational cost or low-computational cost) and progressively selecting (or "switching") neural networks in the same nested series (e.g. sequentially) in either direction, such as by increasing or decreasing size. While nesting has been shown to be advantageous in, for example, iterative image generation, the same applies to other types of multi-step task.

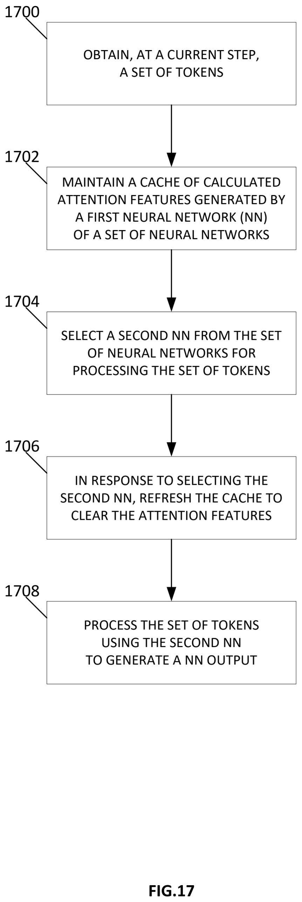

FIG.17 depicts a flow diagram of a method for performing a multi-step task.

At stage 1700, the method comprises obtaining, as an input, at a current step in the multi-step task, a set of tokens,

At stage 1702, the method comprises maintaining a cache of calculated attention features generated by a first neural network of a set of neural networks at a previous step in the multi-step task.

At stage 1704, the method comprises selecting a second neural network from the set of neural networks for processing the set of tokens to generate a neural network output for the current step.

The second neural network is different from the first neural network.

At stage 1706, the method further comprises, in response to selecting the second neural network, refreshing the cache of calculated attention features to clear the calculated attention features generated by the first neural network at the previous step in the multi-step task from the cache.

At stage 1708, the method comprises processing the set of tokens using the second neural network to generate the neural network output for the current step.

Cache (e.g. a KV cache) refreshing is described in the detailed description provided above. It will be appreciated based upon this description that cache refreshing may be applied to any multi-step task (e.g. image, video, or audio generation, such as tasks implementing diffusion) and may occur with any type of suitable neural network (e.g. a neural network implementing an attention mechanism). That is, many multi-step tasks may implement different types of neural networks for processing a given input. For example, a first neural network may process input(s) for a first number of steps and a second neural network may be selected to be used to process input(s) for a second number of steps proceeding the first number of steps. Cache refreshing in response to a change in selection is advantageous in these contexts, as elaborated above, because it overcomes representational misalignment that may otherwise occur by re-using attention features (e.g. keys and values) that were computed for a different neural network, which contributes to overall neural network accuracy (and computational complexity when considering that fewer steps may be required to perform the multi-step task).

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Further aspects of the invention are defined in the following clauses:

1. A computer-implemented method for token generation, the method comprising:

obtaining as an input a set of tokens, wherein one or more positions of the input set of tokens are masked for prediction; and

for each of a plurality of iterations:

generating a predicted token for each masked position in the set of tokens by inputting the set of tokens into a token prediction neural network for the iteration;
selecting one or more predicted tokens for inclusion into the set of tokens; and
updating the set of tokens so that, for each selected predicted token, the selected predicted token becomes an unmasked token at the corresponding masked position in the set of tokens;

wherein the plurality of iterations comprise a plurality of groups of one or more iterations, wherein a different token prediction neural network is used for each group, and a size of the token prediction neural network increases with each subsequent group.

2. The method of clause 1 wherein the token prediction neural networks form a set of nested token prediction neural networks that comprise a master token prediction neural network, and one or more smaller token prediction neural networks, wherein each smaller token prediction neural network is smaller than the master token prediction neural network, and wherein each smaller token prediction neural network is made up of a corresponding subset of parameters of the master token prediction neural network.

3. The method of clause 1 or clause 2 wherein each token prediction neural network comprises a transformer that includes an attention neural network and a feed forward neural network.

4. The method of clause 3 wherein the method further comprises maintaining a cache of calculated attention features for unmasked tokens that are used by the attention neural network.

5. The method of clause 4 wherein maintaining and using the cache comprises, in each iteration:

if one or more attention features are cached for a given unmasked token that is input into the token prediction neural network, using by the attention neural network the cached one or more attention features instead of recalculating the one or more attention features; and
if one or more attention features are not cached for a given unmasked token that is input into the token prediction neural network, calculating by the attention neural network the one or more attention features and adding the one or more calculated features to the cache.

6. The method of clause 4 or clause 5, further comprising, during one or more of the iterations, refreshing the cache.

7. The method of clause 6 wherein the cache is refreshed each time the token prediction neural network model is changed.

8. The method of any of clauses 3-7 wherein the set of nested token prediction neural networks comprise one or both of a set of nested attention neural networks and a set of nested feed forward neural networks.

9. The method of any preceding clause wherein:

the token prediction neural network generates a confidence score for each predicted token; and
selecting one or more predicted tokens for inclusion into the set of tokens comprises selecting a subset of the predicted tokens based on the confidence scores.

10. The method of any preceding clause further comprising, after the plurality of iterations, decoding the set of tokens using a decoder neural network to generate predicted data.

11. The method of clause 10, wherein:

the method is for image generation, the tokens are embedded image features, and the decoder neural network is configured decode the set of tokens to output one or more images;
the method is for video generation, the tokens are embedded video features, and the decoder neural network is configured decode the set of tokens to output one or more frames of a video; or
the method is for audio generation, the tokens are embedded audio features, and the decoder neural network is configured decode the set of tokens to output audio data.

12. The method of any preceding clause, wherein the token prediction neural networks form a series of nested token prediction neural networks including a master token prediction neural network and one or more smaller token prediction neural networks, wherein each smaller token prediction neural network in the series is progressively smaller than the immediately preceding token prediction neural network in the series.

13. The method of clause 12 wherein each smaller token prediction neural network is formed of a subset of parameters of the immediately preceding token prediction neural network in the series.

14. The method of clause 12 or clause 13 wherein the method further comprises:
after the plurality of iterations, training the token prediction neural networks based on a set of training tokens to adjust parameters of the token prediction neural networks.

15. The method of clause 14 wherein the training is based on a loss function that includes:

for the master token prediction neural network, a ground truth loss component that determines a ground truth loss based on the training tokens and the predicted tokens output by the master token prediction neural network; for each smaller token prediction neural network, a distillation loss component that determines a distillation loss for the smaller token prediction neural network based on the predicted tokens output by the smaller token prediction neural network and the predicted tokens output by the immediately preceding token prediction neural network in the series.

16. The method of clause 15 wherein the loss function further includes, for each smaller token prediction neural network, a ground truth loss component that determines a ground truth loss based on the training tokens and the predicted tokens output by the smaller token prediction neural network.

17. The method of clause 16 wherein training is performed over a plurality of training steps, and a weighting between the ground truth loss components and the distillation loss components is adjusted over the plurality of training steps to reduce the influence of the ground truth loss components and increase the influence of the distillation loss components on the updates for the smaller token prediction neural networks.

18. A computer-implemented method for training a system for token generation, the method comprising:

obtaining a training data set comprising sets of input training tokens and corresponding sets of output training tokens;
for each set of input training tokens:

forming a set of tokens from the set of input training tokens, wherein one or more positions of the set of tokens are masked;
for each of a plurality of iterations:

generating a predicted token for each masked position in the set of tokens by inputting the set of tokens into a token prediction neural network for the iteration;
selecting one or more predicted tokens for inclusion into the set of tokens; and
updating the set of tokens so that, for each selected predicted token, the selected predicted token becomes an unmasked token at the corresponding masked position in the set of tokens; and

after the plurality of iterations, setting the set of tokens as a set of predicted tokens for the set of input training tokens; and

modifying parameter values of the token prediction neural networks based on the sets of predicted tokens and the corresponding sets of output training tokens,
wherein the plurality of iterations comprise a plurality of groups of one or more iterations, wherein a different token prediction neural network is used for each group, and a size of the token prediction neural network increases with each subsequent group.

19. A computer-implemented method for training a system for token generation, the method comprising:

obtaining a training data set comprising sets of input training tokens and corresponding sets of output training tokens;
for each set of input training tokens:

forming a set of tokens from the set of input training tokens, wherein one or more positions of the set of tokens are masked;
for each of a plurality of iterations:

generating a predicted token for each masked position in the set of tokens by inputting the set of tokens into a token prediction neural network for the iteration;
selecting one or more predicted tokens for inclusion into the set of tokens; and
setting the set of tokens as a set of predicted tokens for the set of input training tokens, wherein the set of predicted tokens comprise, for each selected predicted token, the respective selected predicted token as an unmasked token at the corresponding masked position in the set of predicted tokens; and

modifying parameter values of the token prediction neural networks based on the sets of predicted tokens generated at each iteration and the corresponding set of output training tokens,

wherein the plurality of iterations comprise a plurality of groups of one or more iterations, wherein a different token prediction neural network is used for each group, and a size of the token prediction neural network increases with each subsequent group.

20. A computer-implemented method for performing a multi-step task, the method comprising:

obtaining, as an input, at a current step in the multi-step task, a set of tokens;
processing, at the current step, the set of tokens using a nested neural network to generate a neural network output, wherein the nested neural network comprises a series of (i) a master neural network and (ii) one or more smaller neural networks, wherein each smaller neural network in the series is made up of a corresponding subset of parameters of both the master neural network and each preceding smaller neural network in the series;
wherein processing the set of tokens using the nested neural network to generate the neural network output at the current step comprises:

selecting one of (i) the master neural network and (ii) the one or more smaller neural networks for processing the set of tokens; and
processing the set of tokens using the selected neural network to generate the neural network output; and

wherein the selection is based upon the selected neural network being adjacent to one of the neural networks of the series used in a previous step of the multi-step task preceding the current step.

21. A computer-implemented method for performing a multi-step task, the method comprising:

obtaining, as an input, at a current step in the multi-step task, a set of tokens;
maintaining a cache of calculated attention features generated by a first neural network of a set of neural networks at a previous step in the multi-step task;
selecting a second neural network from the set of neural networks for processing the set of tokens to generate a neural network output for the current step, wherein the second neural network is different from the first neural network;
in response to selecting the second neural network, refreshing the cache of calculated attention features to clear the calculated attention features generated by the first neural network at the previous step in the multi-step task from the cache; and
processing the set of tokens using the second neural network to generate the neural network output for the current step.

22. The computer-implemented method of clause 21, further comprising:
populating the cache with calculated attention features generated by the second neural network at the current step in the multi-step task.
23. The computer-implemented method of clause 22, further comprising:

obtaining, as an input, at a subsequent step in the multi-step task, a next set of tokens;
retrieving the calculated attention features generated by the second neural network from the cache; and
processing the next set of tokens and the calculated attention features generated by the second neural network using the second neural network to generate the neural network output for the subsequent step.

24. A system comprising one or more computers and one or more storage devices storing instructions that when executed by the one or more computers cause the one or more computers to perform the operations of the method of any one of clauses 1-23.
25. One or more computer storage media storing instructions that when executed by one or more computers cause the one or more computers to perform the operations of the method of any one of clauses 1-23.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented method for token generation, the method comprising:

   obtaining as an input a set of tokens, wherein one or more positions of the input set of tokens are masked for prediction; and
   for each of a plurality of iterations:

   generating a predicted token for each masked position in the set of tokens by inputting the set of tokens into a token prediction neural network for the iteration;
   selecting one or more predicted tokens for inclusion into the set of tokens; and
   updating the set of tokens so that, for each selected predicted token, the selected predicted token becomes an unmasked token at the corresponding masked position in the set of tokens;

   wherein the plurality of iterations comprise a plurality of groups of one or more iterations, wherein a different token prediction neural network is used for each group, and a size of the token prediction neural network increases with each subsequent group.

2. The method of claim 1 wherein the token prediction neural networks form a set of nested token prediction neural networks that comprise a master token prediction neural network, and one or more smaller token prediction neural networks, wherein each smaller token prediction neural network is smaller than the master token prediction neural network, and wherein each smaller token prediction neural network is made up of a corresponding subset of parameters of the master token prediction neural network.

3. The method of claim 1 or claim 2 wherein each token prediction neural network comprises a transformer that includes an attention neural network and a feed forward neural network.

4. The method of claim 3 wherein the method further comprises maintaining a cache of calculated attention features for unmasked tokens that are used by the attention neural network.

5. The method of claim 4 wherein maintaining and using the cache comprises, in each iteration:

   if one or more attention features are cached for a given unmasked token that is input into the token prediction neural network, using by the attention neural network the cached one or more attention features instead of recalculating the one or more attention features; and
   if one or more attention features are not cached for a given unmasked token that is input into the token prediction neural network, calculating by the attention neural network the one or more attention features and adding the one or more calculated features to the cache.

6. The method of claim 4 or claim 5, further comprising, during one or more of the iterations, refreshing the cache.

7. The method of claim 6 wherein the cache is refreshed each time the token prediction neural network model is changed.

8. The method of any of claims 3-7 wherein the set of nested token prediction neural networks comprise one or both of a set of nested attention neural networks and a set of nested feed forward neural networks.

9. The method of any preceding claim wherein:

   the token prediction neural network generates a confidence score for each predicted token; and
   selecting one or more predicted tokens for inclusion into the set of tokens comprises selecting a subset of the predicted tokens based on the confidence scores.

10. The method of any preceding claim further comprising, after the plurality of iterations, decoding the set of tokens using a decoder neural network to generate predicted data.

11. The method of claim 10, wherein:

the method is for image generation, the tokens are embedded image features, and the decoder neural network is configured decode the set of tokens to output one or more images;
the method is for video generation, the tokens are embedded video features, and the decoder neural network is configured decode the set of tokens to output one or more frames of a video; or
the method is for audio generation, the tokens are embedded audio features, and the decoder neural network is configured decode the set of tokens to output audio data.

12. The method of any preceding claim, wherein the token prediction neural networks form a series of nested token prediction neural networks including a master token prediction neural network and one or more smaller token prediction neural networks, wherein each smaller token prediction neural network in the series is progressively smaller than the immediately preceding token prediction neural network in the series; in particular:
wherein each smaller token prediction neural network is formed of a subset of parameters of the immediately preceding token prediction neural network in the series, and/or wherein the method further comprises, after the plurality of iterations, training the token prediction neural networks based on a set of training tokens to adjust parameters of the token prediction neural networks.

13. The method of claim 12 wherein the training is based on a loss function that includes:

for the master token prediction neural network, a ground truth loss component that determines a ground truth loss based on the training tokens and the predicted tokens output by the master token prediction neural network;
for each smaller token prediction neural network, a distillation loss component that determines a distillation loss for the smaller token prediction neural network based on the predicted tokens output by the smaller token prediction neural network and the predicted tokens output by the immediately preceding token prediction neural network in the series;
in particular wherein the loss function further includes, for each smaller token prediction neural network, a ground truth loss component that determines a ground truth loss based on the training tokens and the predicted tokens output by the smaller token prediction neural network;
more particularly wherein training is performed over a plurality of training steps, and a weighting between the ground truth loss components and the distillation loss components is adjusted over the plurality of training steps to reduce the influence of the ground truth loss components and increase the influence of the distillation loss components on the updates for the smaller token prediction neural networks.

14. A computer-implemented method for training a system for token generation, the method comprising:

obtaining a training data set comprising sets of input training tokens and corresponding sets of output training tokens;
for each set of input training tokens:

forming a set of tokens from the set of input training tokens, wherein one or more positions of the set of tokens are masked;
for each of a plurality of iterations:

generating a predicted token for each masked position in the set of tokens by inputting the set of tokens into a token prediction neural network for the iteration;
selecting one or more predicted tokens for inclusion into the set of tokens; and
updating the set of tokens so that, for each selected predicted token, the selected predicted token becomes an unmasked token at the corresponding masked position in the set of tokens; and

after the plurality of iterations, setting the set of tokens as a set of predicted tokens for the set of input training tokens; and

modifying parameter values of the token prediction neural networks based on the sets of predicted tokens and the corresponding sets of output training tokens,

wherein the plurality of iterations comprise a plurality of groups of one or more iterations, wherein a different token prediction neural network is used for each group, and a size of the token prediction neural network increases with each subsequent group.

15. A computer-implemented method for training a system for token generation, the method comprising:

obtaining a training data set comprising sets of input training tokens and corresponding sets of output training tokens;
for each set of input training tokens:

forming a set of tokens from the set of input training tokens, wherein one or more positions of the set of tokens are masked;
for each of a plurality of iterations:

generating a predicted token for each masked position in the set of tokens by inputting the set of tokens into a token prediction neural network for the iteration;
selecting one or more predicted tokens for inclusion into the set of tokens; and
setting the set of tokens as a set of predicted tokens for the set of input training tokens, wherein the set of predicted tokens comprise, for each selected predicted token, the respective selected predicted token as an unmasked token at the corresponding masked position in the set of predicted tokens; and

modifying parameter values of the token prediction neural networks based on the sets of predicted tokens generated at each iteration and the corresponding set of output training tokens,

wherein the plurality of iterations comprise a plurality of groups of one or more iterations, wherein a different token prediction neural network is used for each group, and a size of the token prediction neural network increases with each subsequent group.

FIG.1

FIG.2

FIG.3

4

**CONFIDENCE SCORE THRESHOLD: 0.75**

FIG.4

5

500

TRAINING DATA SET

502

SETS OF INPUT TRAINING TOKENS

504

SETS OF OUTPUT TRAINING TOKENS

510

SET OF TOKENS
WITH MASKED POSITIONS

520

SYSTEM FOR TOKEN GENERATION

522

PLURALITY OF TOKEN PREDICTION
NEURAL NETWORKS

524

PARAMETERS

530

SET OF PREDICTED TOKENS

540

OPTIMIZER

**FIG.5**

## Algorithm 1 MaGNeTS Decoding Algorithm

**Input:** $\mathbf{X}^0$ (Initial Tokens), $K$ (#steps), $N$ (#tokens), $\mathcal{M}$ (Nested Model Schedule), $c$ (class),
**Initialize:** $k \leftarrow 0$; $cache \leftarrow \{\}$;
**Note:** $\mathbf{X}^0$ is a list of token ids (Mask token id $= -1$)
**while** *step* $k < K$ **do**
    **if** $k > 0$ *and* $\mathcal{M}_k \neq \mathcal{M}_{k-1}$ **then**
        |   Clear $cache$
    **end**

    Get uncached tokens: $\mathbf{X}^k_{uc} \leftarrow \{x_i \mid x_i \in \mathbf{X}^k; \ i \notin cache\}$
    Compute prediction probabilities and key-values: $p^k, (kv) \leftarrow \mathcal{M}_k(\mathbf{X}^k_{uc}; cache)$
    Sample tokens using current predictions $p^k$, without modifying previous predictions,

$$\mathbf{X}^{k+1} \leftarrow \text{MaskGIT-Sample}(p^k)$$

    New indices to cache: $\mathcal{C} \leftarrow \{i \mid i \notin cache, \ \mathbf{X}^{k+1}_i \neq -1\}$
    Update the kv cache: $cache \leftarrow cache \cup \{i : (kv)_i \mid i \in \mathcal{C}\}$
    $k \leftarrow k + 1$
**end**
**return** $\mathbf{X}^K$

FIG.6

| Model | AR | FID ↓ | IS ↑ | Prec ↑ | Rec ↑ | # params | # steps | # Gflops |
|---|---|---|---|---|---|---|---|---|
| DCTransformer[□] (Nash et al., 2021) | | 36.5 | - | 36 | 67 | 738M | ≥1024 | - |
| BigGAN-deep[□] (Brock, 2018) | | 7.0 | 171.4 | 87 | 28 | 160M | 1 | - |
| StyleGAN-XL[□g] (Sauer et al., 2022) | | 2.3 | 265.1 | - | - | 166M | 1 | - |
| Improved DDPM[□] (Nichol & Dhariwal, 2021b) | | 12.3 | - | 70 | 62 | 280M | 250 | >5B |
| ADM + Upsample[□g] (Dhariwal & Nichol, 2021) | | 4.6 | 186.7 | 82 | 52 | 554M | 250 | 240k |
| LDM-4[□g*] (Rombach et al., 2022) | | 3.6 | 247.7 | - | - | 400M | 250 | 52k |
| DiT-XL/2[□g*] (Peebles & Xie, 2023) | | 2.3 | 278.2 | 83 | 57 | 675M | 250 | >59k |
| Binary latent diffusion[□] (Wang et al., 2023) | | 8.2 | 162.3 | - | - | 172M | 64 | - |
| MDT[□g*] (Gao et al., 2023) | | 1.8 | 283.0 | 81 | 61 | 676M | 250 | >59k |
| MaskDiT[□g*] (Zheng et al., 2023) | | 2.3 | 276.6 | 80 | 61 | 736M | 250 | >28k |
| CDM[□] (Ho et al., 2022a) | | 4.9 | 158.7 | - | - | - | 8100 | - |
| RIN[□] (Jabri et al., 2022) | | 3.4 | 182.0 | - | - | 410M | 1000 | 334k |
| Simple Diffusion[□g] (Hoogeboom et al., 2023) | | 2.4 | 256.3 | - | - | 2B | 512 | - |
| VDM++[□g] (Kingma & Gao, 2023) | | 2.1 | 267.7 | - | - | 2B | 512 | - |
| MAR[□g] (Li et al., 2024b) | ✓ | 1.8 | 296.0 | 81 | 60 | 479M | 128 | - |
| VQVAE-2[□] (Razavi et al., 2019) | ✓ | 31.1 | ~45 | 36 | 57 | 13.5B | 5120 | - |
| VQGAN[□] (Esser et al., 2021) | ✓ | 15.8 | 78.3 | - | - | 1.4B | 256 | - |
| VQGAN (architecture) + MaskGIT (setup)[□] | | 18.7 | 80.4 | 78 | 26 | 303M | 256 | - |
| MaskGIT[□](Chang et al., 2022) | | 6.2 | 182.1 | 80 | 51 | 303M | 8 | 647 |
| Mo-VQGAN[□] (Zheng et al., 2022) | | 7.2 | 130.1 | 72 | 55 | 389M | 12 | ~1k |
| MaskBit[□g] (Weber et al., 2024) | | 1.7 | 341.8 | - | - | 305M | 64 | 10.3k |
| PAR-4×[□] (Wang et al., 2024) | ✓ | 3.8 | 218.9 | 84 | 50 | 343M | 147 | - |
| PAR-16×[□] (Wang et al., 2024) | ✓ | 2.9 | 262.5 | 82 | 56 | 3.1B | 51 | - |
| MaskGIT++[g4] | | 2.5 | 260.3 | 83 | 54 | 303M | 12 | 1.3k |
| MaskGIT++[g6] | | 2.3 | 280.6 | 84 | 51 | 303M | 16 | 1.8k |
| **MaGNeTS** (ours)[g4] | | 3.1 | 254.8 | 85 | 50 | 303M | 12 | 490 |
| **MaGNeTS** (ours)[g6] | | 2.9 | 253.1 | 84 | 51 | 303M | 16 | 608 |

FIG.7

FIG.8A

FIG.8B

**FIG.9**

FIG.10A

FIG.10B

FIG.11

```
# Function to get the GFlops for current decoding iteration
def get_flops(num_tokens_cached, num_tokens_processed, model_id, params, version):
    num_layers, hidden_size, mlp_dim, num_heads = params[version]
    qkv = 4 * num_tokens_processed * hidden_size * (hidden_size // model_id)
    attn = 2 * num_tokens_processed * (num_tokens_processed + num_tokens_cached) *
    hidden_size
    mlp = 2 * num_tokens_processed * (mlp_dim // model_id) * hidden_size
    return (qkv + attn + mlp) * num_layers // 1e9

# Function to get the total inference GFlops
def get_total_flops(version, num_iters, use_cache, refresh_cache_at, total_tokens,
    model_id_schedule, params, num_cond_tokens=0):
    assert num_cond_tokens < total_tokens
    refresh_cache_at = [int(x) for x in refresh_cache_at.split(',') if x]
    assert len(model_id_schedule) == num_iters
    num_cached = 0
    total_flops = 0

    # MaGNeTS (ours) doesn't need to process the conditioned tokens in the frame
    prediction task
    total_tokens -= num_cond_tokens

    for i in range(num_iters):
        ratio = i / num_iters

        # Cosine masking schedule
        num_processed = np.cos(np.pi/2. * ratio) * total_tokens

        # Even if we are performing caching, all tokens are processed in first iteration
    and iterations where cache is refreshed
        if i == 0 or i in refresh_cache_at and use_cache:
            total_flops += get_flops(0, total_tokens+num_cond_tokens, model_id_schedule[i
    ], params, version)

        # we always cache the conditioned tokens
        else:
            total_flops += get_flops(num_cached+num_cond_tokens, total_tokens-num_cached,
    model_id_schedule[i], params, version)

        if use_cache:
            num_cached = total_tokens - num_processed
    return total_flops
```

**FIG.12A**

```
# Sample function call for class-conditional image generation
# params is a dictionary of the form {version: (num_layers, hidden_size, mlp_dim,
    num_heads)}
common = {'version': 'L', 'num_iters': 12, 'total_tokens': 257, 'params': params}
baseline = {'use_cache': False, 'refresh_at': '', 'model_id_schedule': (1,)*12, **common}
ours = {'use_cache': True, 'refresh_at': '3,6,9', 'model_id_schedule': (8,)*3+(4,)*3+(2,)
    *3+(1,)*3, **common}

print(get_total_flops(**baseline), get_total_flops(**ours))

# total_tokens = 1025 for class-conditional video generation and frame prediction
# num_cond_tokens = 512 for frame prediction
```

**FIG.12B**

1300

OBTAIN AS INPUT A SET OF TOKENS

1302

FOR EACH OF A PLURALITY OF ITERATIONS

1304

GENERATE A PREDICTED TOKEN FOR ONE OR MORE MASKED POSITIONS OF THE INPUT SET OF TOKENS

1306

SELECT PREDICTED TOKEN(S) FOR INCLUSION INTO THE SET OF TOKENS

1308

UPDATE THE SET OF TOKENS

**FIG.13**

1400

OBTAIN A TRAINING DATASET
COMPRISING SETS OF INPUT TRAINING
TOKENS AND CORRESPONDING SETS
OF OUTPUT TRAINING TOKENS

1402

FOR EACH SET OF INPUT TRAINING TOKENS

1404

FORM A SET OF TOKENS FROM THE SET
OF INPUT TRAINING TOKENS

1406

FOR EACH OF A PLURALITY OF ITERATIONS

1408

GENERATE A PREDICTED TOKEN FOR
ONE OR MORE MASKED POSITIONS OF
THE INPUT SET OF TOKENS

1410

SELECT PREDICTED TOKEN(S) FOR
INCLUSION INTO THE SET OF TOKENS

1412

UPDATE THE SET OF TOKENS

1414

SET THE SET OF TOKENS AS A SET OF
PREDICTED TOKENS

1416

MODIFY PARAMETER VALUES OF A
PLURALITY OF TOKEN PREDICTION
NEURAL NETWORKS

FIG.14

1500

OBTAIN A TRAINING DATASET
COMPRISING SETS OF INPUT TRAINING
TOKENS AND CORRESPONDING SETS
OF OUTPUT TRAINING TOKENS

1502

FOR EACH SET OF INPUT TRAINING TOKENS

1504

FORM A SET OF TOKENS FROM THE SET
OF INPUT TRAINING TOKENS

1506

FOR EACH OF A PLURALITY OF ITERATIONS

1508

GENERATE A PREDICTED TOKEN FOR
ONE OR MORE MASKED POSITIONS OF
THE INPUT SET OF TOKENS

1510

SELECT PREDICTED TOKEN(S) FOR
INCLUSION INTO THE SET OF TOKENS

1512

SET THE SET OF TOKENS AS A SET OF
PREDICTED TOKENS

1514

MODIFYING PARAMETER VALUES OF A
PLURALITY OF TOKEN PREDICTION
NEURAL NETWORKS

**FIG.15**

1600

OBTAIN, AT A CURRENT STEP,
A SET OF TOKENS

1602

PROCESS THE SET OF TOKENS
USING A NESTED NEURAL NETWORK (NN)

1604

SELECT ONE OF A MASTER NN
AND ONE OR MORE SMALLER NN
OF THE NESTED NN
FOR PROCESSING THE SET OF TOKENS

1606

PROCES THE SET OF TOKENS
USING THE SELECTED NN
TO GENERATE A NN OUTPUT

**FIG.16**

1700

```
OBTAIN, AT A CURRENT STEP,
A SET OF TOKENS
```

1702

```
MAINTAIN A CACHE OF CALCULATED
ATTENTION FEATURES GENERATED BY
A FIRST NEURAL NETWORK (NN)
OF A SET OF NEURAL NETWORKS
```

1704

```
SELECT A SECOND NN FROM THE SET
OF NEURAL NETWORKS FOR
PROCESSING THE SET OF TOKENS
```

1706

```
IN RESPONSE TO SELECTING THE
SECOND NN, REFRESH THE CACHE TO
CLEAR THE ATTENTION FEATURES
```

1708

```
PROCESS THE SET OF TOKENS
USING THE SECOND NN
TO GENERATE A NN OUTPUT
```

**FIG.17**

Europäisches
Patentamt
European
Patent Office
Office européen
des brevets

# EUROPEAN SEARCH REPORT

**Application Number**

EP 25 20 9534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUIWEN CHANG ET AL: "MaskGIT: Masked Generative Image Transformer", ARXIV.ORG, CORNELL UNIVERSITY LIBRARY, 201 OLIN LIBRARY CORNELL UNIVERSITY ITHACA, NY 14853, 8 February 2022 (2022-02-08), XP091157768, | 1-10, 12-15 | INV. G06N3/045 G06N3/084 |
| A | * abstract * <br> * figures 2,3,9 * <br> * Section 3 * <br> ----- | 11 | |
| A | DEVVRIT ET AL: "MatFormer: Nested Transformer for Elastic Inference", ARXIV.ORG, CORNELL UNIVERSITY LIBRARY, 201 OLIN LIBRARY CORNELL UNIVERSITY ITHACA, NY 14853, 11 October 2023 (2023-10-11), XP091633001, * Section 3, and 4 * <br> ----- | 1-15 | |
| A | YIHONG CHEN ET AL: "NAFRSSR: a Lightweight Recursive Network for Efficient Stereo Image Super-Resolution", ARXIV.ORG, CORNELL UNIVERSITY LIBRARY, 201 OLIN LIBRARY CORNELL UNIVERSITY ITHACA, NY 14853, 14 May 2024 (2024-05-14), XP091756574, * Section III * <br> ----- | 1-15 | **TECHNICAL FIELDS SEARCHED (IPC)** <br><br> G06N |
| T | Goyal Sahil ET AL: "Masked Generative Nested Transformers with Decode Time Scaling", , 1 February 2025 (2025-02-01), pages 1-17, XP093354853, Retrieved from the Internet: URL:https://arxiv.org/pdf/2502.00382 * the whole document * <br> ----- | 1-15 | |

The present search report has been drawn up for all claims

| Place of search | Date of completion of the search | Examiner |
|---|---|---|
| The Hague | 19 January 2026 | Mariani, Giovanni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)